# EUROPÄISCHE PATENTANMELDUNG

(11) **EP 4 152 206 A1**
(43) Veröffentlichungstag der Anmeldung: **22.03.2023**
(21) Anmeldenummer: 21197230.2
(22) Anmeldetag: 16.09.2021
(51) Int. Cl.: G06K 9/62, G06V 10/82, H02G 1/12, H01R 43/28

(54) **KABELVERARBEITUNGSVORRICHTUNG UND VERFAHREN**

(71) Anmelder: MD Elektronik GmbH, 84478 Waldkraiburg (DE)
(72) Erfinder: Riegl, Christoph, 84437 Reichertsheim (DE); Ohni, Josef, 84559 Kraiburg am Inn (DE)
(74) Vertreter: Kehl, Ascherl, Liebhoff & Ettmayr Patentanwälte Partnerschaft mbB

(57) **Zusammenfassung**

Die vorliegende Erfindung umfasst eine Kabelverarbeitungsvorrichtung (100, 200, 300, 800) aufweisend eine erste Aufnahmeeinrichtung (101, 201-1, 301-1, 801-1), welche ausgebildet ist, ein erstes Kabelende (191, 291-1, 291-2, 391-1, 391-2, 491, 591, 691, 891-1, 891-2, 991) eines Kabels (190) aufzunehmen und in einer vorgegebenen Position zu fixieren, eine Bildaufnahmeeinrichtung (102, 202, 302-1, 302-2, 802-1, 802-2), welche ausgebildet ist, zumindest ein Bild (103, 203, 303-1, 303-2, 803-1, 803-2) des ersten Kabelendes (191, 291-1, 291-2, 391-1, 391-2, 491, 591, 691, 891-1, 891-2, 991) aufzunehmen, und eine Auswerteeinrichtung (104, 204, 304, 804), welche ausgebildet ist, auf das zumindest eine Bild (103, 203, 303-1, 303-2, 803-1, 803-2) einen trainierten Algorithmus (105, 205, 305, 805) anzuwenden, und auf Basis von zumindest einem von dem trainierten Algorithmus (105, 205, 305, 805) ausgegebenen Ergebnis ein Steuersignal (106, 206, 306, 806) zu erzeugen und auszugeben, wobei der trainierte Algorithmus (105, 205, 305, 805) ausgebildet ist, jeweils ein vorgegebenes Merkmal (196, 496) in dem zumindest einen Bild (103, 203, 303-1, 303-2, 803-1, 803-2) zu identifizieren und ein positives Ergebnis auszugeben, wenn das vorgegebene Merkmal (196, 496) in dem Bild (103, 203, 303-1, 303-2, 803-1, 803-2) identifizierbar ist. Ferner offenbart die vorliegende Erfindung ein entsprechendes Verfahren.

## Beschreibung

### Technisches Gebiet

Die Erfindung betrifft eine Kabelverarbeitungsvorrichtung und ein Verfahren zur automatischen Verarbeitung von Kabeln, insbesondere Datenkabeln.

### Stand der Technik

Die vorliegende Erfindung wird hauptsächlich in Verbindung mit der Herstellung von Datenkabeln beschrieben. Es versteht sich, dass die vorliegende Erfindung aber für die Herstellung jeder Art von Kabeln genutzt werden kann.

Bei der Herstellung von Datenkabeln werden die Kabel üblicherweise in einer automatisierten Verarbeitungsanlage bearbeitet und beispielsweise konfektioniert, also auf die entsprechende Länge abgelängt und mit entsprechenden elektrischen Kontakten und/oder Steckern versehen. Eine einzige automatisierte Verarbeitungsanlage umfasst dabei mehrere Stationen, wobei bei jeder Station ein definierter Verarbeitungsschritt durchgeführt wird.

Um eine fehlerfreie Verarbeitung solcher Kabel in großen Stückzahlen zu ermöglichen, müssen die Kabel in der jeweiligen Verarbeitungsanlage auf die korrekte Umsetzung der einzelnen Verarbeitungsschritte überprüft werden. Insbesondere ist es innerhalb einer bestimmten Verarbeitungsanlage erforderlich, vor einzelnen Stationen die dieser Station zugeführten bzw. diese Station verlassenden Kabel dahingehend zu prüfen, ob die Kabel vorgegebenen Anforderungen entsprechen, um weiter verarbeitet werden zu können.

Hierzu ist es bekannt, die Kabel während der Verarbeitung bei einzelnen Stationen mittels einer Bilderkennung zu erfassen und zu bewerten. Bekannte Bilderkennungssysteme sollen unterschiedliche Kabeltypen bei ggf. sich ändernden Beleuchtungsverhältnissen mit hoher Zuverlässigkeit sicher erkennen können. Dies ist mit bekannten Bilderkennungssystemen nur schwer möglich.

### Beschreibung der Erfindung

Es ist daher eine Aufgabe der vorliegenden Erfindung, eine Prozessüberwachung in der automatisierten Kabelkonfektion zu verbessern.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Eine erfindungsgemäße Kabelverarbeitungsvorrichtung weist eine erste Aufnahmeeinrichtung, welche ausgebildet ist, ein erstes Kabelende eines Kabels aufzunehmen und in einer vorgegebenen Position zu fixieren, eine Bildaufnahmeeinrichtung, welche ausgebildet ist, zumindest ein Bild des ersten Kabelendes aufzunehmen, und eine Auswerteeinrichtung auf, welche ausgebildet ist, auf das zumindest eine Bild einen trainierten Algorithmus anzuwenden, und auf Basis von zumindest einem von dem trainierten Algorithmus ausgegebenen Ergebnis ein Steuersignal zu erzeugen und auszugeben. Der trainierte Algorithmus ist dabei ausgebildet, jeweils ein vorgegebenes Merkmal in dem zumindest einen Bild zu identifizieren und ein positives Ergebnis auszugeben, wenn das vorgegebene Merkmal in dem Bild identifizierbar ist bzw. identifiziert wird. Der trainierte Algorithmus ist insbesondere dazu ausgebildet, das vorgegebene Merkmal in dem unmittelbar aufgenommenen Bild zu identifizieren.

Ein erfindungsgemäßes Verfahren zur automatischen Verarbeitung von Kabeln weist auf: Fixieren mindestens eines Kabelendes eines Kabels in einer vorgegebenen Position, Aufnehmen zumindest eines Bildes des mindestens einen Kabelendes, Anwenden eines trainierten Algorithmus auf das zumindest eine Bild, wobei der trainierte Algorithmus ausgebildet ist, jeweils ein vorgegebenes Merkmal in dem zumindest einen Bild zu identifizieren und ein positives Ergebnis auszugeben, wenn das vorgegebene Merkmal in dem Bild identifizierbar ist bzw. identifiziert wird, und Erzeugen und Ausgeben eines Steuersignals auf Basis von zumindest einem von dem trainierten Algorithmus ausgegebenen Ergebnis. Dabei ist insbesondere vorgesehen, dass der trainierte Algorithmus unmittelbar auf das aufgenommene zumindest eine Bild angewendet wird, so dass der trainierte Algorithmus die Rohdaten selbst auswertet und die Rohdaten (das unmittelbar aufgenommene Bild) keiner nachgelagerten Bildverarbeitung unterzogen werden müssen, bevor das Bild ausgewertet werden kann.

Die vorliegende Erfindung basiert auf der Erkenntnis, dass herkömmliche Bilderverarbeitungssysteme nur wenig flexibel sind und fehlerfreie Bauteile leicht fälschlicherweise als fehlerhafte Bauteile identifizieren können.

Beispielsweise kann bei herkömmlichen Bilderverarbeitungssystemen ein Bauteil, welches verdreht oder nicht an der exakt vorgegebenen Position fotografiert wurde, bereits als fehlerhaft identifiziert werden, auch wenn dieses keine Fehler aufweist.

Die vorliegende Erfindung sieht daher vor, ein herkömmliches Bilderverarbeitungssystem durch einen trainierbaren Algorithmus, also einen Algorithmus aus dem Bereich der künstlichen Intelligenz, zu ersetzen und die Fehlererkennung mit Hilfe des trainierbaren Algorithmus durchzuführen. Es versteht sich, dass ein trainierbarer Algorithmus und der erwähnte trainierte Algorithmus der gleiche Algorithmus sein können. Der Begriff "trainierbarer" Algorithmus bezeichnet dabei jede Form des Algorithmus, während der Begriff "trainierter" Algorithmus den Algorithmus nach dem Durchlauf eines Trainings mittels eines entsprechenden Trainingsdatensatzes betrifft.

Im Gegensatz zu sehr starr arbeitenden herkömmlichen Bilderverarbeitungssystemen können trainierbare Algorithmen üblicherweise flexibel auf sich ändernde Rahmenbedingungen reagieren und die vorgegebene Aufgabe dennoch erfolgreich durchführen. Beispielsweise kann ein entsprechend trainierter Algorithmus ein vorgegebenes Objekt in einem Bild üblicherweise unabhängig von seiner Position oder der Beleuchtung in dem Bild erkennen. Im Gegensatz hierzu sind herkömmliche Bilderverarbeitungssysteme üblicherweise darauf angewiesen, dass das entsprechende Objekt an einer exakt vorgegebenen Position mit einer vorgegebenen Orientierung in dem Bild angeordnet wird, um es zu untersuchen.

Die vorliegende Erfindung sieht daher eine Kabelverarbeitungsvorrichtung vor, welche eine erste Aufnahmeeinrichtung aufweist, welche ein erstes Kabelende eines Kabels in einer vorgegebenen Position aufnimmt. Eine Bildaufnahmeeinrichtung nimmt zumindest ein Bild des ersten Kabelendes des Kabels auf. Schließlich wendet eine Auswerteeinrichtung einen trainierten Algorithmus auf das zumindest eine Bild an, um das Vorhandensein eines vorgegebenen Merkmals an dem ersten Kabelende des Kabels festzustellen. Insbesondere ist vorgesehen, dass die Auswerteeinrichtung den trainierten Algorithmus unmittelbar auf das zumindest eine Bild anwendet, also auf die Rohdaten, die vor der Auswertung in der Auswerteeinrichtung keiner zusätzlichen Bearbeitung oder Bildverarbeitung zugeführt werden müssen.

Die Auswerteeinrichtung kann in einer Ausführungsform als Hardware, Software oder als eine Kombination aus Hardware und Software ausgebildet sein. Eine solche Auswerteeinrichtung kann z.B. als ASIC, FPGA, CPLD oder dergleichen ausgebildet sein. Alternativ kann eine solche Auswerteeinrichtung z.B. als Computerprogrammprodukt ausgebildet sein, welche von einem Prozessor, z.B. in einem Computer, ausgeführt wird. Insbesondere kann der trainierte Algorithmus z.B. auf Basis des Framework (Software-Pakets) Tensorflow ausgebildet sein.

Ist das vorgegebene Merkmal in einem entsprechenden Bild an dem ersten Kabelende des Kabels vorhanden bzw. wird das vorgegebene Merkmal positiv identifiziert, gibt der trainierte Algorithmus ein entsprechendes Ergebnis, z.B. ein positives Ergebnis, aus. Kann der trainierte Algorithmus das vorgegebene Merkmal in dem entsprechenden Bild nicht an dem ersten Kabelende des Kabels identifizieren, kann der trainierte Algorithmus ein entsprechendes negatives Ergebnis ausgeben. Es versteht sich, dass ein trainierter Algorithmus einen Ergebnisvektor ausgeben kann, wobei die Anzahl der Elemente des Vektors, der Anzahl der durch den trainierten Algorithmus zu identifizierenden Merkmale entspricht. In einer Ausführung, in welcher der trainierte Algorithmus lediglich ein einziges Merkmal zu identifizieren hat, kann der Vektor folglich lediglich ein Element aufweisen. Als "positives" Ergebnis kann dabei ein Wert gelten, der oberhalb eines vorgegebenen Schwellwertes liegt. Beispielsweise kann jedes Ausgangselement des Vektors einen vorgegebenen Wertebereich, z.B. 0 - 255 oder 0 - 1 oder dergleichen aufweisen. Bei einem Vektor mit nur einem Element, kann ein Ergebnis z.B. als positiv gewertet werden, wenn dessen Wert größer ist, als die Mitte des Wertebereichs, oder ein vorgegebener Schwellwert. Bei einem Vektor mit mehreren Elementen, kann dasjenige Element als das "positive" Ergebnis gelten, welches den größten Wert aufweist. Es gilt dann das dem entsprechenden Element zugeordnete vorgegebene Merkmal als positiv identifiziert. Selbstverständlich kann für ein solches Element ebenfalls ein Schwellwert vorgegebenen werden.

Die Auswerteeinrichtung erzeugt im Anschluss aus der Ausgabe des trainierten Algorithmus ein entsprechendes Steuersignal und gibt dieses aus, um die Kabelverarbeitungsvorrichtung entsprechend zu steuern. Das Steuersignal kann in der Kabelverarbeitungsvorrichtung z.B. dazu führen, dass ein Kabel als Ausschuss bzw. defekt behandelt wird, wenn das vorgegebene Merkmal nicht an dem Kabelende identifiziert wird. Wird das vorgegebene Merkmal an dem Kabelende des Kabels identifiziert, kann das Steuersignal dagegen dazu führen, dass das Kabel dem nächsten Verarbeitungsschritt zugeführt wird.

In einer Verarbeitungsanlage für Kabel kann eine Kabelverarbeitungsvorrichtung gemäß der vorliegenden Erfindung in, vor oder nach unterschiedlichen, insbesondere auch mehreren, Verarbeitungsschritten angeordnet sein.

Es versteht sich, dass der trainierte Algorithmus auf einem trainierbaren Algorithmus basiert, welcher ein entsprechendes Training durchlaufen hat. Im Rahmen eines solchen Trainings können dem trainierbaren Algorithmus entsprechende Trainingsdaten präsentiert werden, welche vorab bereits in positive und negative Trainingsbeispiele unterteilt wurden. Ein solcher Trainingsdatensatz kann z.B. händisch erstellt werden oder aus den Ergebnissen eines herkömmlichen Bilderverarbeitungssystems gewonnen werden.

Im Folgenden wird eine mögliche Ausführungsform für die Erstellung eines Trainingsdatensatzes und das Training des trainierbaren Algorithmus beschrieben. Es versteht sich, das die beschriebene Erstellung und das Training auch unabhängig von der Kabelverarbeitungsvorrichtung genutzt werden können. Die vorliegende Offenbarung offenbart daher explizit eine solche Erstellung und ein entsprechendes Training als separate Gegenstände.

Für das Training des trainierbaren Algorithmus wird ein entsprechender Satz an Trainingsbildern erzeugt. Die Bilder zeigen dabei positive und negative Beispiele, also Kabelenden von Kabeln, welche das jeweilige vorgegebene Merkmal aufweisen oder nicht. Diese Trainingsbilder werden als positive und negative Trainingsbilder qualifiziert. Diese Qualifizierung kann per Hand erfolgen oder zumindest teilweise von einem herkömmlichen Bildverarbeitungssystem durchgeführt werden, wobei eine händische Nacharbeit möglich ist.

Die vorab qualifizierten Trainingsbilder werden im Anschluss für das Training entsprechend vorverarbeitet.

Beispielsweise kann die Größe der Trainingsbilder auf eine vorgegebene Größe angepasst werden. Insbesondere kann die Anzahl der Pixel der Trainingsbilder der Anzahl der Eingänge einer Eingangsschicht des trainierbaren Algorithmus angepasst werden. In einer Ausführungsform kann der trainierbare Algorithmus beispielsweise quadratische Bilder mit einer vorgegebenen Größe verarbeiten.

Die Vorverarbeitung der Trainingsbilder kann auch das Normalisieren der Bilder aufweisen. Beispielsweise können die Bilder in Graustufenbilder gewandelt werden, falls sie nicht als solche vorliegen. Ferner können die maximalen und die minimalen Graustufenwerte der einzelnen Trainingsbilder angepasst werden, so dass die Graustufen aller Trainingsbilder in einem vorgegebenen Bereich liegen.

Um die Ergebnisse, welche mit dem trainierbaren Algorithmus zu erzielen sind, zu verbessern bzw. robuster zu gestalten, können die Trainingsbilder ferner zufälligen Bildmanipulationen unterzogen werden. Solche Bildmanipulationen können z.B. ein Rotieren, ein Vergrößern, ein Verkleinern und/oder ein Verzerren aufweisen. Es versteht sich, dass entsprechende Größenordnungen für die jeweilige Bildmanipulation vorgegeben werden können. Beispielsweise kann für das Vergrößern oder Verkleinern eine maximale Vergrößerung bzw. Verkleinerung in Prozent angegeben werden, z.B. 110% oder 90%. Für die Rotation kann z.B. ein maximaler oder minimaler Rotationswinkel, z.B. +/- 10°, 20° oder 30°, angegeben werden. Ebenso können für das Verzerren entsprechende Grenzwerte vorgegeben werden. Es versteht sich, dass unterschiedliche Algorithmen für die Bildverzerrung genutzt werden können, welche unterschiedliche Parameter aufweisen können.

Die Bildmanipulationen dienen dazu, die Trainingsdaten mit einer größeren Variabilität zu versehen. Das vorgegebene Merkmal wird in den positiven Trainingsbildern folglich an unterschiedlichen Stellen und in unterschiedlicher Größe vorhanden sein. Damit wird z.B. verhindert, dass der trainierbare Algorithmus lernt, das vorgegebene Merkmal nur in einem kleinen Ausschnitt eines Bildes zu identifizieren, und fälschlicherweise den Schluss zieht, dass Merkmal sei nicht vorhanden, obwohl es z.B. lediglich außerhalb des Ausschnitts liegt.

Nach der Vorverarbeitung der Trainingsbilder wird der trainierbare Algorithmus mit einem Teil der so erhaltenen Trainingsbilder, auch Trainingsdaten genannt, trainiert. Die verbleibenden Trainingsbilder können zur Überprüfung der Lernerfolge genutzt werden, indem sie dem trainierten Algorithmus zugeführt werden und dessen Ausgabe mit der für das jeweilige Trainingsbild gekannten bzw. erwarteten Ausgabe verglichen wird. Dieser Teil der Trainingsbilder kann daher auch als Testdaten bezeichnet werden.

Es versteht sich, dass das Training je nach Typ des genutzten trainierbaren Algorithmus unterschiedlich ausgeführt werden kann. Grundsätzlich werden bei jeder Art von Training die Parameter des trainierbaren Algorithmus bei jedem Trainingsdurchlauf angepasst, so dass der Fehler der Ausgabe des trainierbaren Algorithmus minimiert wird. Dies wird üblicherweise durch eine sog. Back-Propagation, Fehlerrückführung oder Rückpropagierung erreicht.

Für das Training kann ferner eine sog. Epochenanzahl und ein Abbruchkriterium angegeben werden. Die Epochenanzahl gibt die Anzahl der Trainingsdurchläufe an. Dabei kann für jeden Trainingsdurchlauf eine vorgegebene Anzahl der Trainingsdaten, z.B. alle Trainingsdaten oder nur eine Auswahl der Trainingsdaten, genutzt werden. Das Abbruchkriterium gibt dabei an, wie weit das Ergebnis des trainierbaren Algorithmus vom idealen Ergebnis abweichen darf, um das Training als erfolgreich abgeschlossen ansehen zu können.

Je nach Art des trainierbaren Algorithmus können weitere Trainingsparameter vorgegeben werden. Beispielsweise können bei einem Neuronalen Netzwerk die initialen Gewichte der einzelnen Neuronen und eine Lernrate angegeben werden.

Nach Abschluss des Trainings kann die Qualität des Trainings, wie oben bereits erwähnt, mittels einer Qualifikation der Testdaten durch den trainierten Algorithmus überprüft werden. Erreichen die Ergebnisse die gewünschte Qualität, kann das Training beendet werden. Sollten die Ergebnisse die gewünschte Qualität nicht erreichen, kann das Training fortgesetzt oder mit veränderten Parametern erneut durchgeführt werden.

Eine Kabelverarbeitungsvorrichtung, deren Auswerteeinrichtung einen so trainierten Algorithmus nutzt, um Bilder von Kabelenden auszuwerten bzw. zu bewerten, kann mit großer Sicherheit feststellen, ob das jeweilige Kabelende eines Kabels das vorgegebene Merkmal aufweist oder nicht. Folglich kann die Qualitätssicherung bei der Verarbeitung von Kabeln mit einer solchen Kabelverarbeitungsvorrichtung erhöht werden.

Es versteht sich, dass es sich bei dem vorgegebenen Merkmal um ein explizites Merkmal handeln kann, also ein Merkmal, welches vorhanden sein kann oder fehlen kann. Ein solches explizites Merkmal kann z.B. eine Markierung oder ein Verbindungselement an dem Kabelende des Kabels sein. Bei dem vorgegebenen Merkmal kann es sich aber auch um ein implizites Merkmal handeln, also ein Merkmal, welches einen Zustand kennzeichnet. Ein solches implizites Merkmal kann z.B. den Zustand einer Verriegelung an einem Verbindungselement an dem Kabelende des Kabels kennzeichnen.

Weitere Ausführungsformen und Weiterbildungen ergeben sich aus den Unteransprüchen sowie aus der Beschreibung unter Bezugnahme auf die Figuren.

In einer Ausführungsform kann die Kabelverarbeitungsvorrichtung eine zweite Aufnahmeeinrichtung aufweisen, welche ausgebildet ist, ein zweites Kabelende des Kabels aufzunehmen und in einer vorgegebenen Position zu fixieren. Die Bildaufnahmeeinrichtung kann in solch einer Ausführungsform ferner ausgebildet sein, zumindest ein Bild des zweiten Kabelendes aufzunehmen.

Ein Kabel weist üblicherweise zwei Kabelenden auf, wobei Y-artige Kabel auch drei oder mehr Kabelenden aufweisen können. Insbesondere Datenkabel für hohe Datenraten werden aber üblicherweise in Punkt-zu-Punkt Verbindungen eingesetzt und weisen folglich zwei Kabelenden auf.

In einer Verarbeitungsanlage für solche Kabel kann es wichtig sein, nicht nur das Vorhandensein eines Merkmals zu prüfen, sondern zusätzlich zu prüfen an welchem Kabelende des Kabels ein Merkmal vorhanden ist. In weiteren Ausführungsformen kann alternativ überprüft werden, ob das vorgegebene Merkmal an beiden Kabelenden des Kabels vorhanden ist.

Weist die Kabelverarbeitungsvorrichtung zwei Aufnahmeeinrichtungen auf, können folglich beide Kabelenden eines Kabels gleichzeitig in der Kabelverarbeitungsvorrichtung aufgenommen und untersucht werden. Es versteht sich, dass die zwei Aufnahmeeinrichtungen derart ausgebildet sein können, dass sie in der Verarbeitungsanlage für Kabel zwischen den einzelnen Verarbeitungsschritten weitergeleitet werden können. Die Aufnahmeeinrichtungen können also die Kabelenden dauerhaft, für mehrere Verarbeitungsschritte aufnehmen und fixieren.

Werden zwei Kabelenden eines Kabels der Kabelverarbeitungsvorrichtung zugeführt, können unterschiedliche Prüfungen vorgenommen werden.

Muss sichergestellt werden, dass ein bestimmtes Kabelende eines Kabels in einer bestimmten der Aufnahmeeinrichtungen liegt und ist dieses Kabelende durch ein Merkmal gekennzeichnet, kann mit Hilfe der Kabelverarbeitungsvorrichtung geprüft werden, ob das Merkmal an dem Kabelende des Kabels vorhanden ist, welches in derjenigen Aufnahmeeinrichtung fixiert ist, welche das entsprechende Kabelende aufweisen soll.

Muss dagegen sichergestellt werden, dass beide Kabelenden des Kabels ein vorgegebenes Merkmal aufweisen, kann mit Hilfe der Kabelverarbeitungsvorrichtung geprüft werden, ob beide Kabelenden des Kabels das vorgegebene Merkmal aufweisen. Handelt es sich um das gleiche Merkmal, muss der trainierbare Algorithmus nicht für jedes Kabelende einzeln trainiert werden. Vielmehr kann der trainierte Algorithmus nacheinander auf die Bilder der einzelnen Kabelenden angewandt werden und die Ausgaben des Algorithmus entsprechend ausgewertet werden.

In einer weiteren Ausführungsform kann die Bildaufnahmeeinrichtung eine erste Kamera aufweisen, welche ausgebildet ist, Bilder in einer Draufsicht auf das jeweilige Kabelende aufzunehmen.

Werden die Bilder der Kabelenden in einer Draufsicht aufgenommen, kann mit einem einzelnen Bild die halbe Mantelfläche des jeweiligen Kabelendes aufgenommen werden. Eine Markierung an dem Kabelende, welche eine größere Fläche, als die halbe Mantelfläche umfasst, kann folglich mit diesem einen Bild zuverlässig erkannt werden.

In noch einer weiteren Ausführungsform kann die Bildaufnahmeeinrichtung eine zweite Kamera aufweisen, welche ausgebildet ist, Bilder in einer perspektivischen Sicht auf das jeweilige Kabelende aufzunehmen. Der Ausdruck "perspektivische Sicht" bezieht sich dabei auf eine Position der zweiten Kamera, welche um die Längsachse des Kabelendes in Bezug auf die erste Kamera um einen vorgegebenen Winkel versetzt angeordnet ist. Dieser Winkel kann z.B. ein Winkel größer 0° und kleiner 90° sein. Es versteht sich, dass die Aufnahme- bzw. Bildrichtung der zweiten Kamera auf das Kabelende gerichtet ist.

Mit Hilfe der zweiten, perspektivisch angeordneten Kamera kann jeweils ein Bild aus einer perspektivischen Sicht auf das Kabelende aufgenommen werden. Mit Hilfe der zwei Bilder können folglich Markierungen an dem Kabelende auch dann erkannt werden, wenn diese kleiner sind, als die halbe Mantelfläche.

In einer Ausführungsform kann der trainierte Algorithmus ein neuronales Netzwerk, insbesondere ein Convolutional Neural Network, CNN, oder deep Convolutional Neural Network, dCNN, aufweisen. Insbesondere zur Klassifikation von Objektion in Bilddaten liefern CNNs und dCNNs sehr gute Ergebnisse. Es versteht sich, dass weitere Algorithmen aus dem Bereich des maschinellen Lernens ebenfalls möglich sind.

Ein beispielhaftes neuronales Netzwerk kann z.B. als deep Convolutional Neural Network ausgebildet sein und eine Eingangsschicht sowie eine Vielzahl von versteckten Schichten und eine Ausgangsschicht aufweisen. Die versteckten Schichten können dabei zumindest teilweise identische oder sich wiederholende Schichten aufweisen.

Die Eingangsschicht kann einen Eingang für jeden Pixel der aufgenommen Bilder aufweisen. Es versteht sich, dass die Bilder z.B. als Array oder Vektor mit der entsprechenden Anzahl an Elementen an die Eingangsschicht übermittelt werden können. Ferner kann die Größe der aufgenommen Bilder für alle Bilder gleich sein kann. Beispielsweise können die Bilder mit 224*224 Pixeln aufgenommen werden und einen Graustufenwert pro Pixel aufweisen. Es versteht sich, dass diese Angaben lediglich beispielhaft angeführt sind und andere Auflösungen sowie schwarz/weiß oder Farbbilder genutzt werden können.

Eine solche Schicht kann die erste Schicht des neuronalen Netzwerks sein (in Klammern werden die Namen der jeweiligen Schicht im Softwarepaket Tensorflow / keras angegeben, wobei der Übersichtlichkeit halber der Bestandteil "tensorflow.python.keras..." nicht mit angegeben wird):
- Schicht 1:: Eingang ("engine.input_layer.InputLayer") (als Beispiel für allgemein eine Eingabeschicht bzw. Inputlayer).

Die verdeckten Schichten können eine Art Aufbereitung der eingegebenen Daten vornehmen und diese dann in einer Vielzahl von identischen Blöcken weiterverarbeiten. Diese Schichten können z.B. Schichten zum Auffüllen mit Nullen, sog. Zero Padding Schichten, Schichten für eine Faltung, Schichten für eine Normalisierung, und Schichten zur Aktivierung, insbesondere mittels einer sog. ReLU Funktion, auch rectified linear unit genannt sein.

Ein beispielhafter Schichtaufbau solcher Schichten zur Aufbereitung der Daten kann wie folgt lauten (in Klammern werden die Namen der jeweiligen Schicht im Softwarepaket Tensorflow / keras angegeben, wobei der Übersichtlichkeit halber der Bestandteil "tensorflow.python.keras..." nicht mit angegeben wird):
- Schicht 2:: Zero Padding ("layers.convolutional.ZeroPadding2D")
- Schicht 3:: Faltung ("layers.convolutional.Conv2D")
- Schicht 4:: Normalisierung ("layers.normalization_v2.BatchNormalization")
- Schicht 5:: Aktivierung ("layers.advanced_activations.ReLU")
- Schicht 6:: Faltung ("layers.convolutional.DepthwiseConv2D")
- Schicht 7:: Normalisierung ("layers.normalization_v2.BatchNormalization")
- Schicht 8:: Aktivierung ("layers.advanced_activations.ReLU")
- Schicht 9:: Faltung ("layers.convolutional.Conv2D")
- Schicht 10:: Normalisierung ("layers.normalization_v2.BatchNormalization")

Es versteht sich, dass abweichende Schichtanordnungen möglich sind und obiger Aufbau lediglich beispielhaft gezeigt wird.

An diese Schichten können sich Blöcke anschließen, die jeweils einen identischen Aufbau aufweisen können. Jeder der Blöcke kann z.B. Schichten zur Faltung, zur Normalisierung, zur Aktivierung, insbesondere mittels einer sog. ReLU Funktion, auch rectified linear unit genannt, und zum Padding, insbesondere sog. Zero Padding aufweisen.

Ein beispielhafter Schichtaufbau eines solchen Blocks kann wie folgt lauten (in Klammern werden die Namen der jeweiligen Schicht im Softwarepaket Tensorflow / keras angegeben, wobei der Übersichtlichkeit halber der Bestandteil "tensorflow.python.keras..." nicht mit angegeben wird):
- Schicht 11:: Faltung ("layers.convolutional.Conv2D")
- Schicht 12:: Normalisierung ("layers.normalization_v2.BatchNormalization")
- Schicht 13:: Aktivierung ("layers.advanced_activations.ReLU")
- Schicht 14:: Zero Padding ("layers.convolutional.ZeroPadding2D")
- Schicht 15:: Faltung ("layers.convolutional.DepthwiseConv2D")
- Schicht 16:: Normalisierung ("layers.normalization_v2.BatchNormalization")
- Schicht 17:: Aktivierung ("layers.advanced_activations.ReLU")
- Schicht 18:: Faltung ("layers.convolutional.DepthwiseConv2D")
- Schicht 19:: Normalisierung ("layers.normalization_v2.BatchNormalization")

Es versteht sich, dass abweichende Schichtanordnungen möglich sind und obiger Aufbau lediglich beispielhaft gezeigt wird. Ein beispielhafter trainierbarer Algorithmus kann z.B. 10 - 20, insbesondere 14 - 18 oder 16 solcher Blöcke aufweisen.

An die Blöcke können sich weitere versteckte Schichten anschließen. Ein beispielhafter Schichtaufbau kann wie folgt lauten (in Klammern werden die Namen der jeweiligen Schicht im Softwarepaket Tensorflow / keras angegeben, wobei der Übersichtlichkeit halber der Bestandteil "tensorflow.python.keras..." nicht mit angegeben wird):
- Schicht 20:: Faltung ("layers.convolutional.DepthwiseConv2D")
- Schicht 21:: Normalisierung ("layers.normalization_v2.BatchNormalization")
- Schicht 22:: Aktivierung ("layers.advanced_activations.ReLU")
- Schicht 23:: Pooling ("layers.pooling.GlobalAveragePooling2D")

Es versteht sich, dass abweichende Schichtanordnungen möglich sind und obiger Aufbau lediglich beispielhaft gezeigt wird.

Die Ausgangsschicht schließt sich an die versteckten Schichten an und ist die letzte Schicht des neuronalen Netzwerks (in Klammern werden die Namen der jeweiligen Schicht im Softwarepaket Tensorflow / keras angegeben, wobei der Übersichtlichkeit halber der Bestandteil "tensorflow.python.keras..." nicht mit angegeben wird):
- Schicht 24:: Ausgang ("layers.core.Dense")

Ein neuronales Netzwerk nach obigen Angaben mit z.B. 16 Blöcken weist folglich eine Eingangsschicht, neun Schichten zur Aufbereitung der Daten, 9*16 Schichten der Blöcke, 4 versteckte Schichten und eine Ausgangsschicht, also 159 Schichten auf.

In einer weiteren Ausführungsform kann das vorgegebene Merkmal eine Markierung an dem Kabelende aufweisen. Der trainierte Algorithmus kann trainiert sein, diese vorgegebene Markierung an dem Kabelende zu identifizieren.

Bei der Verarbeitung von Kabeln sind häufig einzelne Enden eines Kabels mit einer Markierung versehen. Diese Markierung kann z.B. als sog. A-Markierung bezeichnet werden. Eine solche Markierung kann z.B. als ein Quadrat oder Rechteck ausgebildet sein, welches sich farblich von dem Material des Kabelmantels abhebt und einen vorgegebenen umlaufenden Abschnitt der Mantelfläche des Kabelmantels bedeckt.

Als weiteres Beispiel kann das vorgegebene Merkmal auch eine Bedruckung sein, wobei die Bedruckung, beispielsweise eine Text- oder Ziffernfolge, von dem Hersteller des zu verarbeitenden Kabels angebracht wird, und wobei der trainierte Algorithmus so trainiert sein kann, das Vorhandensein oder das Fehlen einer derartigen Bedruckung zu identifizieren.

Das Training, welches nötig ist, um aus einem trainierbaren Algorithmus den trainierten Algorithmus zu erzeugen, kann auf Basis eines vorgegebenen Satzes an Trainingsdaten durchgeführt werden. Eine mögliche Ausgestaltung eines solchen Trainings ist oben bereits angegeben. Es versteht sich, dass der Trainingsdatensatz eine Vielzahl von Bildern aufweisen kann, welche Kabelenden zeigen, die die jeweilige Markierung aufweisen oder nicht, wobei zu jedem der Bilder zusätzlich die Information vorliegt, ob es die jeweilige Markierung zeigt oder nicht.

In einer Ausführungsform, in welcher das vorgegebene Merkmal eine Markierung (oder eine Bedruckung - die im Folgenden für eine Markierung gemachten Ausführungen gelten für den Fall einer Bedruckung entsprechend) aufweisen kann, kann die Kabelverarbeitungsvorrichtung zwei Aufnahmeeinrichtungen aufweisen und die Bildaufnahmeeinrichtung kann zwei Kameras aufweisen. Damit ist es möglich, von den zwei Kabelenden, welche in den zwei Aufnahmeeinrichtungen fixiert werden jeweils zwei Bilder, eines aus einer Draufsicht und eines aus einer perspektivischen Sicht, aufzunehmen und diese anschließend zu analysieren. Es können in Summe also vier Bilder aufgenommen werden.

In noch einer Ausführungsform kann die Auswerteeinrichtung ausgebildet sein, ein positives Steuersignal auszugeben, und zwar insbesondere genau ein einziges positives Steuersignal auszugeben, wenn die vorgegebene Markierung an exakt einem Kabelende in den Bildern einer der zwei Kameras identifiziert wird, und ein Fehlersignal auszugeben, wenn die vorgegebene Markierung nicht an exakt einem Kabelende in den Bildern einer der zwei Kameras identifiziert wird.

Bei einer solchen Ausführung können die vier Bilder nacheinander durch den trainierbaren Algorithmus analysiert werden. Folglich werden vier Identifikationsergebnisse ausgegeben. Die Markierung kann z.B. derart ausgebildet sein, dass lediglich eines der Bilder die Markierung aufweisen darf. Die Prüfung der Analyseergebnisse durch die Auswerteeinrichtung kann folglich beinhalten zu prüfen, ob lediglich für eines der Bilder die vorgegebene Markierung identifiziert wurde. Ist dies der Fall, kann ein entsprechendes Steuersignal ausgegeben werden. Der Ausdruck "positives Steuersignal" bezieht sich dabei auf ein Steuersignal, welches nach einer positiven Prüfung der Bilder ausgegeben wird. Wird die Markierung bei einer solchen Ausführung nicht in exakt einem der Bilder identifiziert, sondern z.B. in keinem oder mehr als einem der Bilder, kann die Auswerteeinrichtung ein Fehlersignal oder negatives Steuersignal ausgeben, welches die fehlerhafte Prüfung des Kabels kennzeichnet. Das jeweilige Kabel kann dann z.B. als Ausschuss aus der Verarbeitung entfernt werden oder einer manuellen Nachprüfung bzw. Nacharbeit zugeführt werden.

Die Auswerteeinrichtung kann ferner ausgebildet sein, zu prüfen, in welchem der Bilder die Markierung erkannt wurde. Es kann also z.B. geprüft werden, ob die Markierung in dem Bild erkannt wurde, welches die erste Kamera von dem ersten Kabelende aufgenommen hat.

Bei einem solchen Ausführungsbeispiel kann der trainierbare Algorithmus einen Vektor mit nur einem Element ausgeben, welches angibt, ob in dem jeweiligen Bild die vorgegebene Markierung erkannt wurde. Alternativ kann der trainierbare Algorithmus einen Vektor mit zwei Elementen ausgeben, wobei eines der Elemente anzeigt, dass in dem jeweiligen Bild die Markierung erkannt wurde, und das andere Element anzeigt, dass in dem jeweiligen Bild die Markierung nicht erkannt wurde. Es kann also immer nur eines der Elemente ein positives Ergebnis anzeigen.

Alternativ kann der trainierbare Algorithmus auch derart ausgebildet sein, dass er für jedes Bild zusätzlich analysiert, ob das jeweilige Bild eine Draufsicht auf das Kabelende oder eine perspektivische Sicht des Kabelendes zeigt. Dazu können z.B. an den Kabelenden oder an den Aufnahmeeinrichtungen entsprechende zusätzliche Markierungen vorgesehen sein, welche in einer perspektivischen Ansicht im Vergleich zur Draufsicht verzerrt dargestellt werden. Solche Markierungen ermöglichen es folglich zu identifizieren, ob das jeweilige Bild in einer Draufsicht oder einer perspektivischen Ansicht aufgenommen wurde.

Bein einem solchen Ausführungsbeispiel kann der trainierbare Algorithmus einen Vektor mit zwei Elementen ausgeben. Eines der Elemente kann dabei angeben, ob in dem jeweiligen Bild die vorgegebene Markierung erkannt wurde. Das zweite Element kann angeben, ob das jeweilige Bild in einer Draufsicht aufgenommen wurde. Alternativ kann der trainierbare Algorithmus einen Vektor mit vier Elementen ausgeben, wobei jeweils zwei der Elemente komplementär zueinander sind, also die zwei Elemente eines Paars angeben, ob die Markierung erkannt wurde oder nicht, und die zwei Elemente des weiteren Paars angeben, ob das Bild in der Draufsicht oder einer perspektivischen Sicht aufgenommen wurde.

Bei einer solchen Ausführungsform kann durch die Auswerteeinrichtung z.B. geprüft werden, ob exakt zwei der Bilder eine Draufsicht zeigen und die Markierung in exakt einem der Bilder erkannt wurde.

Wird nicht nur geprüft, ob die Markierung überhaupt in einem der Bilder vorhanden ist, sondern auch, in welchem Bild die Markierung vorhanden ist, kann ein Rückschluss auf die Lage bzw. Orientierung des Kabelendes gezogen werden und beurteilt werden, ob das Kabel in der korrekten Lage bzw. Orientierung in der jeweiligen Aufnahmeeinrichtung liegt.

In einer Ausführungsform kann das vorgegebene Merkmal als Stecker oder Verbinder ausgebildet sein, der an dem jeweiligen Kabelende angeordnet ist, und der trainierte Algorithmus kann trainiert sein, das Vorhandensein eines Steckers oder Verbinders an dem Kabelende zu identifizieren.

Kabel, insbesondere Datenkabel, werden üblicherweise an beiden Enden jeweils mit einem Stecker oder Verbinder versehen. Es ist daher in der Verarbeitung solcher Kabel zu prüfen, ob die Stecker nach den jeweiligen Verarbeitungsschritten auch tatsächlich an dem jeweiligen Kabelende vorhanden sind oder nicht. Fehlerhaft angebrachte Stecker oder Verbinder können sich z.B. lösen und vom Kabelende abfallen oder eine fehlerhafte Verarbeitungsanlage kann das Anbringen des Steckers oder Verbinders gänzlich unterlassen.

Das Training, welches nötig ist, um aus einem trainierbaren Algorithmus den trainierten Algorithmus zu erzeugen, kann auf Basis eines vorgegebenen Satzes an Trainingsdaten durchgeführt werden. Eine mögliche Ausgestaltung eines solchen Trainings ist oben bereits angegeben. Es versteht sich, dass der Trainingsdatensatz eine Vielzahl von Bildern aufweisen kann, welche Kabelenden zeigen, die den jeweiligen Stecker oder Verbinder aufweisen oder nicht, wobei zu jedem der Bilder zusätzlich die Information vorliegt, ob es den jeweiligen Stecker oder Verbinder zeigt oder nicht.

In einer Ausführungsform kann das vorgegebene Merkmal eine Verriegelungsvorrichtung aufweisen und der trainierte Algorithmus kann trainiert sein, das Vorhandensein einer Verriegelungsvorrichtung, insbesondere einer Kontaktverriegelungsvorrichtung, an dem Kabelende zu identifizieren.

Wie oben bereits erläutert, kann dem trainierten Algorithmus ein Bild eines Kabelendes zugeführt werden. Der trainierte Algorithmus kann darauf trainiert sein, als das vorgegebene Merkmal eine Verriegelungsvorrichtung zu identifizieren. Eine solche Verriegelungsvorrichtung kann z.B. eine Verriegelungsvorrichtung an einem Verbinder oder Stecker sein.

Insbesondere in industriellen Anwendungen oder Automotive-Anwendungen werden Kabel üblicherweise gegen ein versehentliches Lösen mit einer Verriegelungsvorrichtung gesichert. Eine solche Verriegelungsvorrichtung kann an dem jeweiligen Verbinder oder Stecker in Form eines Rastelements, eines Bügels oder dergleichen vorgesehen sein.

Ferner können auch einzelne Kontakte, die jeweils an Adern eines mehradrigen Kabels angeordnet sind, gegen ein herausrutschen aus einem Steckergehäuse gesichert sein. Eine solche Verriegelungsvorrichtung wird auch Sekundärverriegelung oder Kontaktverriegelung bzw. Kontaktverriegelungsvorrichtung genannt. Eine Kontaktverriegelung kann z.B. formschlüssig in die einzelnen Kontakt eingreifen, z.B. mittels entsprechender Stifte, Nasen oder Haken, und diese in der jeweiligen Position fixieren.

Die Verriegelungsvorrichtung kann je nach Ausführung unabhängig von dem jeweiligen Stecker oder Verbinder montiert werden. Insbesondere für solche Verriegelungsvorrichtungen kann eine separate Prüfung auf das Vorhandensein der Verriegelungsvorrichtung vorteilhaft sein.

Der trainierte Algorithmus kann entsprechend darauf trainiert sein, in einem Bild jeweils die Verriegelungsvorrichtung zu identifizieren und eine entsprechende Ausgabe bereitzustellen, welche kennzeichnet, ob die Verriegelungsvorrichtung in dem jeweiligen Bild identifiziert wurde oder nicht.

Das Training, welches nötig ist, um aus einem trainierbaren Algorithmus den trainierten Algorithmus zu erzeugen, kann auf Basis eines vorgegebenen Satzes an Trainingsdaten durchgeführt werden. Eine mögliche Ausgestaltung eines solchen Trainings ist oben bereits angegeben. Es versteht sich, dass der Trainingsdatensatz eine Vielzahl von Bildern aufweisen kann, welche Kabelenden zeigen, die die jeweilige Verriegelungsvorrichtung aufweisen oder nicht, wobei zu jedem der Bilder zusätzlich die Information vorliegt, ob es die jeweilige Verriegelungsvorrichtung zeigt oder nicht.

In einer Ausführungsform kann die Auswerteeinrichtung daher ausgebildet sein, ein positives Steuersignal auszugeben, wenn die Verriegelungsvorrichtung in zumindest einem der Bilder identifiziert wird, und ein Fehlersignal auszugeben, wenn die vorgegebene Markierung nicht in zumindest einem der Bilder identifiziert wird.

Die Auswerteeinrichtung kann jeweils zwei Bilder eines der Kabelenden bewerten, also ein in der Draufsicht aufgenommenes Bild und ein in einer perspektivischen Sicht aufgenommenes Bild, um festzustellen, ob an dem jeweiligen Kabelende eine Verriegelungsvorrichtung vorhanden ist. Die Auswerteeinrichtung kann die Verriegelungsvorrichtung z.B. als vorhanden qualifizieren, wenn gemäß dem trainierten Algorithmus in zumindest einem der Bilder die Verriegelungsvorrichtung vorhanden ist. Alternativ kann auch gefordert sein, dass gemäß dem trainierten Algorithmus in beiden Bildern die Verriegelungsvorrichtung vorhanden ist.

Es versteht sich, dass die Auswerteeinrichtung eines oder beide Kabelenden bewerten kann, je nachdem, ob an einem oder beiden Kabelenden eine Verriegelungsvorrichtung vorhanden sein sollte.

In noch einer Ausführungsform kann das vorgegebene Merkmal den Zustand einer Verriegelungsvorrichtung kennzeichnen und der trainierte Algorithmus kann trainiert sein, den Zustand einer Verriegelungsvorrichtung, insbesondere einer Kontaktverriegelungsvorrichtung, an dem Kabelende zu identifizieren.

Es versteht sich, dass nicht nur das Vorhandensein einer Verriegelungsvorrichtung in der Verarbeitung von Kabeln relevant sein kann. Beispielsweise ist der Zustand einer Verriegelungsvorrichtung ebenso relevant. So kann eine Verriegelungsvorrichtung ein einem Stecker oder Verbinder sich in einem geöffneten oder einem verriegelten Zustand befinden. Je nach Zweck der Verriegelungsvorrichtung kann einer dieser Zustände gefordert sein.

Beispielsweise kann gefordert werden, dass eine Kontaktverriegelung nach einem Verarbeitungsschritt geschlossen ist. Dagegen kann z.B. gefordert werden, dass eine Verriegelungsvorrichtung zum Verriegeln zweier Stecker oder Verbinder während oder am Ende der Verarbeitung des Kabels geöffnet sein muss, da diese erst in der jeweiligen Anwendung geschlossen wird.

Der trainierte Algorithmus kann folglich dazu trainiert sein, den Zustand einer Verriegelungsvorrichtung zu erkennen und auszugeben. Ein so trainierter Algorithmus kann z.B. einen Vektor mit einem Element ausgeben, welches angibt, ob die Verriegelungsvorrichtung geöffnet oder verriegelt ist. Alternativ kann ein so trainierter Algorithmus einen Vektor mit zwei komplementären Elementen ausgeben, wobei eines der Elemente angibt, dass die Verriegelungsvorrichtung geöffnet ist, und eines der Elemente angibt, dass die Verriegelungsvorrichtung geschlossen ist.

Das Training, welches nötig ist, um aus einem trainierbaren Algorithmus den trainierten Algorithmus zu erzeugen, kann auf Basis eines vorgegebenen Satzes an Trainingsdaten durchgeführt werden. Eine mögliche Ausgestaltung eines solchen Trainings ist oben bereits angegeben. Es versteht sich, dass der Trainingsdatensatz eine Vielzahl von Bildern aufweisen kann, welche Kabelenden zeigen, die jeweils die Verriegelungsvorrichtung in einem geöffneten oder verriegelten Zustand zeigen, wobei zu jedem der Bilder zusätzlich die Information vorliegt, ob es die Verriegelungsvorrichtung in einem geöffneten oder verriegelten Zustand zeigt.

In einer weiteren Ausführungsform kann die Auswerteeinrichtung ausgebildet sein, ein positives Steuersignal auszugeben, wenn der Zustand der Verriegelungsvorrichtung in zumindest einem der Bilder als verriegelter Zustand identifiziert wird, und ein Fehlersignal auszugeben, wenn der Zustand nicht als verriegelter Zustand identifiziert wird. Alternativ, kann die Auswerteeinrichtung ausgebildet sein, ein Fehlersignal auszugeben, wenn der Zustand der Verriegelungsvorrichtung in zumindest einem der Bilder als verriegelter Zustand identifiziert wird, und ein positives Steuersignal auszugeben, wenn der Zustand nicht als verriegelter Zustand identifiziert wird.

Wie oben bereits erläutert, kann je nach Anwendung und Art der Verriegelungsvorrichtung gefordert sein, dass die Verriegelungsvorrichtung sich in einem geöffneten oder geschlossenen Zustand befindet.

Die Auswerteeinrichtung kann jeweils zwei Bilder eines der Kabelenden bewerten, also ein in der Draufsicht aufgenommenes Bild und ein in einer perspektivischen Sicht aufgenommenes Bild, um festzustellen, in welchem Zustand sich die jeweilige Verriegelungsvorrichtung befindet. Die Auswerteeinrichtung kann die Verriegelungsvorrichtung z.B. als geöffnet oder geschlossen qualifizieren, wenn gemäß dem trainierten Algorithmus in zumindest einem der Bilder die Verriegelungsvorrichtung geöffnet oder geschlossen ist. Alternativ kann auch gefordert sein, dass gemäß dem trainierten Algorithmus in beiden Bildern die Verriegelungsvorrichtung geöffnet oder geschlossen ist.

Es versteht sich, dass die Auswerteeinrichtung eines oder beide Kabelenden bewerten kann, je nachdem, ob an einem oder beiden Kabelenden eine Verriegelungsvorrichtung vorhanden sein sollte und ein entsprechender Zustand vorgegeben ist.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine schematische Darstellung einer Ausführungsform einer Kabelverarbeitungsvorrichtung gemäß der vorliegenden Erfindung;
- Figur 2: eine schematische Darstellung einer weiteren Ausführungsform einer Kabelverarbeitungsvorrichtung gemäß der vorliegenden Erfindung;
- Figur 3: eine schematische Darstellung noch einer weiteren Ausführungsform einer Kabelverarbeitungsvorrichtung gemäß der vorliegenden Erfindung;
- Figur 4: eine schematische Darstellung eines Kabelendes zur Verarbeitung in einer Ausführung einer Kabelverarbeitungsvorrichtung gemäß der vorliegenden Erfindung;
- Figur 5: eine schematische Darstellung eines weiteren Kabelendes zur Verarbeitung in einer Ausführung einer Kabelverarbeitungsvorrichtung gemäß der vorliegenden Erfindung;
- Figur 6: eine schematische Darstellung eines weiteren Kabelendes zur Verarbeitung in einer Ausführung einer Kabelverarbeitungsvorrichtung gemäß der vorliegenden Erfindung;
- Figur 7: eine weitere Darstellung des Kabelendes der Figur 6;
- Figur 8: eine schematische Darstellung einer weiteren Ausführungsform einer Kabelverarbeitungsvorrichtung gemäß der vorliegenden Erfindung;
- Figur 9: eine schematische Darstellung eines weiteren Kabelendes zur Verarbeitung in einer Ausführung einer Kabelverarbeitungsvorrichtung gemäß der vorliegenden Erfindung; und
- Figur 10: ein Ablaufdiagramm einer Ausführungsform eines Verfahrens gemäß der vorliegenden Erfindung.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

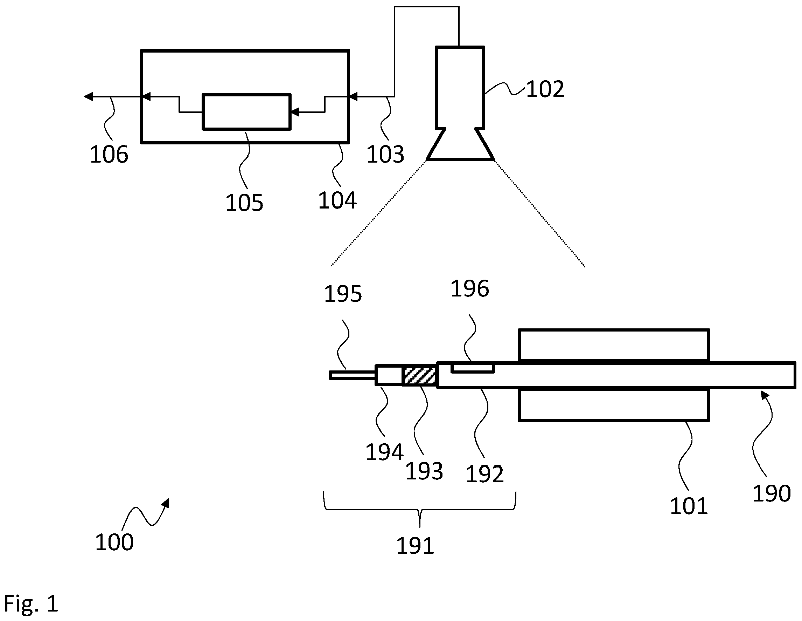

Figur 1 zeigt eine Kabelverarbeitungsvorrichtung 100. Die Kabelverarbeitungsvorrichtung 100 weist eine erste Aufnahmeeinrichtung 101, eine Bildaufnahmeeinrichtung 102 und eine Auswerteeinrichtung 104 auf.

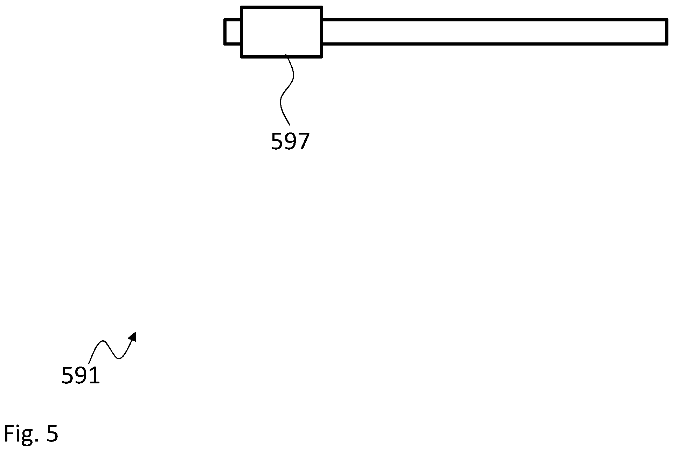

Die erste Aufnahmeeinrichtung 101 ist dazu ausgebildet, ein erstes Kabelende 191 eines Kabels 190 aufzunehmen und in einer vorgegebenen Position zu fixieren. In Figur 1 ist beispielhaft ein Kabel 190 dargestellt, das einen Mantel 192 aufweist, der ein Schirmgeflecht 193 umschließt, das auf einem Isolator 194 angeordnet ist. Der Isolator 194 umschließt den Leiter 195 des Kabels 190. Das Kabel 190 kann insbesondere als Koaxialkabel ausgebildet sein. Es versteht sich, dass die Kabelverarbeitungsvorrichtung 100 mit jeder anderen Art von Kabel ebenfalls verwendet werden kann. Auf dem Mantel 192 des Kabels 190 ist eine Markierung 196 angebracht, wobei die Markierung 196 das von einem trainierten Algorithmus 105 zu identifizierende Merkmal darstellt. Es versteht sich, dass die Markierung 196 lediglich beispielhaft als zu identifizierendes Merkmal genannt ist, und dass auch andere Arten von Merkmalen genutzt werden können. Mögliche Merkmale wurden bereits oben erläutert und werden in den Figuren 5 - 7 gezeigt.

Die Bildaufnahmeeinrichtung 102 nimmt zumindest ein Bild 103 des ersten Kabelendes 191 auf und sendet die Bilddaten an die Auswerteeinrichtung 104. Es versteht sich, dass üblicherweise von jedem Kabelende 191 ein einzelnes Bild 103 aufgenommen werden kann. Sollte es erforderlich sein, kann die Bildaufnahmeeinrichtung 102 aber auch mehre Bilder 103 von dem Kabelende 191 aufnehmen.

Die Auswerteeinrichtung 104 wendet auf das eine Bild 103 den trainierten Algorithmus 105 an und erzeugt auf Basis eines von dem trainierten Algorithmus 105 ausgegebenen Ergebnisses ein Steuersignal 106. Insbesondere ist vorgesehen, dass die Auswertevorrichtung 104 den trainierten Algorithmus auf das unmittelbar aufgenommene Bild 103 bzw. auf einen Teilausschnitt des unmittelbar aufgenommenen Bildes 103, anwendet. Für das Bereitstellen des Teilausschnitts des unmittelbar aufgenommenen Bildes 103 kann zwischen der Bildaufnahmeeinrichtung 102 und der Auswerteeinrichtung 104 noch ein Zwischenprogramm (insbesondere eine Bildverarbeitungssoftware, speziell ein öffentlich verfügbares Bildbearbeitungsprogramm, beispielsweise ,Eye Vision Technology' (EVT)) geschaltet sein, dessen einzige Aufgabe darin besteht, das unmittelbar aufgenommene Bild 103 zuzuschneiden und nur einen definierten Ausschnitt als Teilausschnitt an die Auswertevorrichtung 104 weiterzugeben; diese Aufgabe des Ausschneidens eines Teilausschnitts aus dem unmittelbar aufgenommenen Bild 103 kann auch innerhalb der Auswerteeinrichtung 104 durchgeführt werden. Es versteht sich aber, dass auch das unmittelbar aufgenommene Bild 103, nicht nur ein Teilausschnitt, in der Auswerteeinrichtung 104 ausgewertet werden kann.

Der trainierte Algorithmus 105 kann z.B. ein neuronales Netzwerk, insbesondere ein Convolutional Neural Network, aufweisen. Dieses neuronale Netzwerk kann ausgebildet und trainiert sein, ein vorgegebenes Merkmal 196 in dem zumindest einen Bild 103 zu identifizieren und ein positives Ergebnis auszugeben, wenn das vorgegebene Merkmal 196 in dem Bild 103 identifizierbar ist. Eine mögliche Ausgestaltung für ein solches neuronales Netzwerk ist bereits oben beschrieben. Ebenso wird ein möglicher Trainingsablauf bereits oben beschrieben. Insbesondere kann vorgesehen sein, dass das neuronale Netzwerk so ausgebildet und trainiert ist, das vorgegebene Merkmal 196 in dem zumindest einem unmittelbar aufgenommenen Bild 103 zu identifizieren. Dabei lässt sich vermeiden, dass das unmittelbar aufgenommene Bild 103, als Rohdaten, erst einer Bildbearbeitung oder einer Bildauswertung bzw. einer Bildanalyse bedarf, um in einem folgenden Schritt in bearbeiteter Form durch das neuronale Netzwerk ausgewertet zu werden.

Das Steuersignal 106 kann in einer Verarbeitungsanlage für Kabel, in welcher die Kabelverarbeitungsvorrichtung 100 eingesetzt wird, ausgewertet werden und die weitere Verarbeitung des Kabels 190 beeinflussen. Gibt das Steuersignal 106 z.B. an, dass die Markierung 196 auf dem Mantel wie erwartet identifiziert wurde, kann der nächste Verarbeitungsschritt eingeleitet werden. Zeigt das Steuersignal 106 dagegen an, dass die Markierung 196 nicht identifiziert werden konnte, kann das Kabel 190 z.B. als defekt identifiziert und von der weiteren Verarbeitung ausgeschlossen werden.

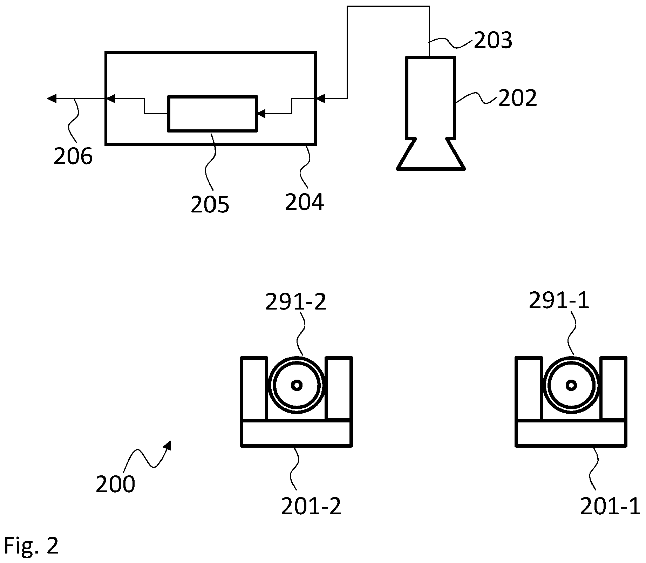

Figur 2 zeigt eine Kabelverarbeitungsvorrichtung 200. Die Kabelverarbeitungsvorrichtung 200 geht von der in Fig. 1 näher beschriebenen Kabelverarbeitungsvorrichtung 100 aus und bildet diese dahingehend fort, dass eine zweite Aufnahmeeinrichtung 201-2 vorgesehen ist. Folglich weist die Kabelverarbeitungsvorrichtung 200 eine erste Aufnahmeeinrichtung 201-1, eine zweite Aufnahmeeinrichtung 201-2, eine Bildaufnahmeeinrichtung 202 und eine Auswerteeinrichtung 204 auf. Die Auswerteeinrichtung 204 weist ferner einen trainierten Algorithmus 205 auf.

Wie bei der anhand von Fig. 1 näher beschriebenen Kabelverarbeitungsvorrichtung 100, nimmt die erste Aufnahmeeinrichtung 201-1 ein erstes Kabelende 291-1 eines Kabels auf. Die zweite Aufnahmeeinrichtung 201-2 nimmt ein zweites Kabelende 291-2 des Kabels auf. Das Kabel kann also in Form einer Schlaufe in einem Kabelspanner einer Verarbeitungsanlage eingespannt sein und die zwei Kabelenden 291-1, 291-2 können gleichzeitig in der Kabelverarbeitungsvorrichtung 200 erfasst und bewertet werden.

Die Bildaufnahmeeinrichtung 202 nimmt bei der Kabelverarbeitungsvorrichtung 200 von jedem der zwei Kabelenden 291-1, 291-2 eines oder mehrere Bilder 203 auf.

Die Auswerteeinrichtung 204 kann die Bilder 203 nacheinander verarbeiten, wendet also auf jedes der Bilder separat den trainierten Algorithmus 205 an, und erzeugt ein entsprechendes Steuersignal 206. Zu dem trainierten Algorithmus 205 gelten die obigen Ausführungen zu dem trainierten Algorithmus 105. Insbesondere kann vorgesehen sein, dass die Auswerteeinrichtung 204 auf jedes der unmittelbar aufgenommenen Bilder 203 den trainierten Algorithmus 205 anwendet.

Die Auswerteeinrichtung 204 kann z.B. ein positives Steuersignal 206 erzeugen, wenn exakt eines der zwei Kabelenden 291-1, 291-2 eine Markierung bzw. ein vorgegebenes Merkmal aufweist. In anderen Ausführungsformen kann die Auswerteeinrichtung 204 ein positives Steuersignal 206 erzeugen, wenn beide Kabelenden 291-1, 291-2 eine Markierung bzw. ein vorgegebenes Merkmal aufweisen.

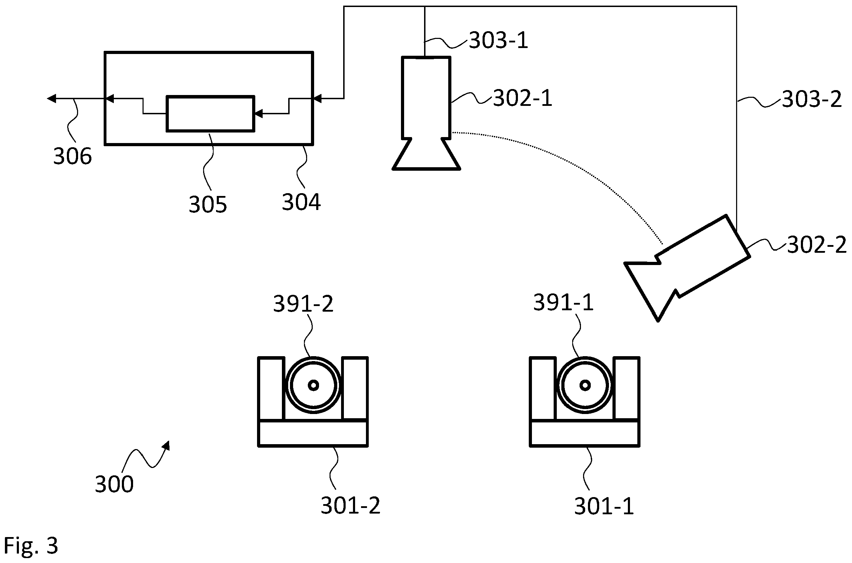

Figur 3 zeigt eine Kabelverarbeitungsvorrichtung 300. Die Kabelverarbeitungsvorrichtung 300 basiert auf der Kabelverarbeitungsvorrichtung 200 und bildet diese dahingehend fort, dass die Bildaufnahmeeinrichtung eine erste Kamera 302-1 und eine zweite Kamera 302-2 aufweist. Folglich weist die Kabelverarbeitungsvorrichtung 300 eine erste Aufnahmeeinrichtung 301-1, eine zweite Aufnahmeeinrichtung 301-2, eine erste Kamera 302-1, eine zweite Kamera 302-2 und eine Auswerteeinrichtung 304 auf. Die Auswerteeinrichtung 304 weist ferner einen trainierten Algorithmus 305 auf. Es versteht sich, dass die zweite Aufnahmeeinrichtung 301-2 lediglich optional ist und die Kabelverarbeitungsvorrichtung 300 auch nur einer Aufnahmeeinrichtung 301-1 aufweisen kann.

Die erste Kamera 302-1 nimmt Bilder 303-1 von den Kabelenden 391-1, 391-2 aus einer Draufsicht auf. Die zweite Kamera 302-2 ist dagegen um die Längsachse der Kabelenden 391-1, 391-2 um einen vorgegebenen Winkel gegenüber der ersten Kamera 302-1 versetzt bzw. verschwenkt angeordnet und nimmt Bilder 303-2 der Kabelenden 391-1, 391-2 aus einer perspektivischen Sicht auf.

Bei zwei zu untersuchenden Kabelenden 391-1, 391-2 können bei der Kabelverarbeitungsvorrichtung 300 z.B. vier Bilder 302-1, 302-2 aufgenommen werden.

Die Auswerteeinrichtung 304 kann die Bilder 303-1, 303-2 nacheinander verarbeiten, wendet also auf jedes der Bilder separat den trainierten Algorithmus 305 an, und erzeugt ein entsprechendes Steuersignal 306. Zu dem trainierten Algorithmus 305 gelten die obigen Ausführungen zu dem trainierten Algorithmus 105 und 205. Insbesondere kann vorgesehen sein, dass die Auswerteeinrichtung 304 die unmittelbar aufgenommenen Bilder 303-1, 303-2 verarbeitet, also auf jedes der unmittelbar aufgenommenen Bilder, also auf die Rohdaten, den trainierten Algorithmus 305 anwendet.

Die Auswerteeinrichtung 304 kann z.B. ein positives Steuersignal 306 erzeugen, wenn exakt eines der zwei Kabelenden 391-1, 391-2 eine Markierung bzw. ein vorgegebenes Merkmal aufweist. Dabei kann in einer Ausführungsform die Markierung derart ausgebildet sein, dass sie jeweils nur ein einem der zwei Bilder 303-1, 303-2 von einem der Kabelenden 391-1, 391-2 sichtbar ist. Die Auswerteeinrichtung 304 kann in solch einer Ausführungsform das positive Steuersignal 306 z.B. lediglich dann erzeugen, wenn in nur einem der Bilder 303-1, 303-2 die Markierung identifiziert wurde. In anderen Ausführungsformen kann die Auswerteeinrichtung 304 ein positives Steuersignal 306 erzeugen, wenn beide Kabelenden 391-1, 391-2 eine Markierung bzw. ein vorgegebenes Merkmal aufweisen. Auch hier kann die Markierung derart ausgebildet sein, dass sie jeweils lediglich in einem von zwei Bildern 303-1, 303-2 eines Kabelendes 391-1, 391-2 sichtbar ist.

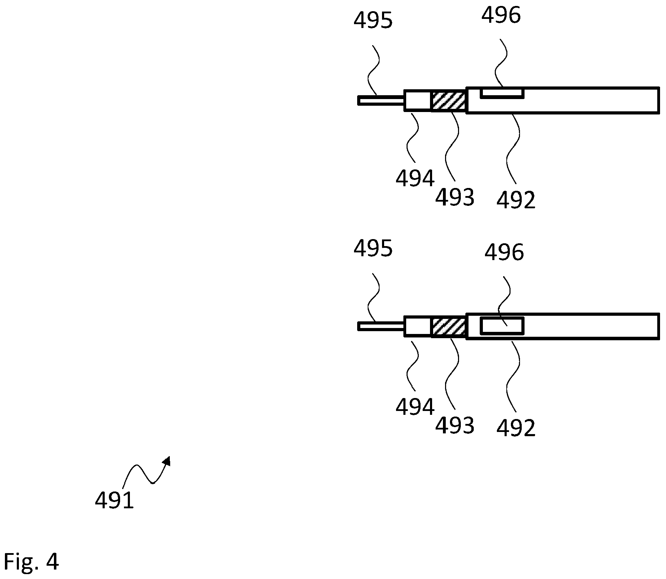

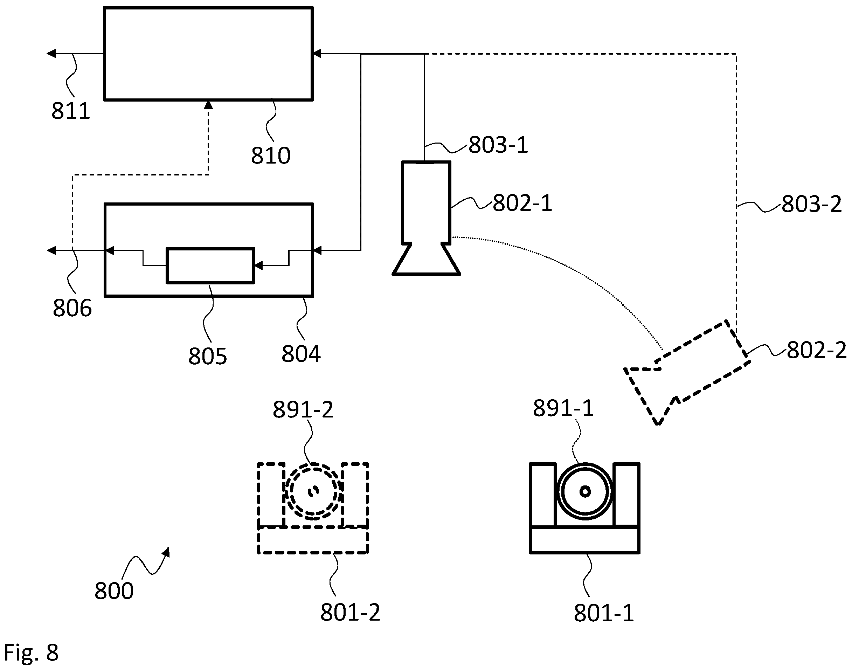

Figur 4 zeigt ein Kabelende 491, wie es in einer der vorstehend in Fig. 1, 2, oder 3 oder nachfolgend in Fig. 8 näher beschriebenen beispielhaften Kabelverarbeitungsvorrichtungen 100, 200, 300, 800 verarbeitet werden kann, in einer Seitenansicht (oben) und einer Draufsicht (unten). Das Kabelende 491 entspricht dem in Figur 1 gezeigten Kabelende 191. Das Kabelende 491 weist folglich einen Mantel 492 auf, welcher ein Schirmgeflecht 493 umschließt, welches auf einem Isolator 494 angeordnet ist. Der Isolator 494 umschließt den Leiter 495 des Kabels.

Auf dem Mantel 492 des Kabels ist lediglich beispielhaft eine rechteckige Markierung 496 angebracht, welche das von dem trainierten Algorithmus zu identifizierende Merkmal darstellt. Es versteht sich, dass andere Formen der Markierung 496 ebenfalls möglich sind.

Es versteht sich ferner, dass die Markierung 496 als zu identifizierendes Merkmal auch auf anderen Arten von Kabeln, also nicht nur auf Koaxialkabeln, genutzt werden kann. Beispielsweise kann eine solche Markierung 496 auch in Verbindung mit mehradrigen Datenkabeln genutzt werden.

Figur 5 zeigt ein weiteres Kabelende 591, wie es in einer der vorstehend in Fig. 1, 2, oder 3 oder nachfolgend in Fig. 8 näher beschriebenen beispielhaften Kabelverarbeitungsvorrichtungen 100, 200, 300, 800 verarbeitet werden kann.

Das Kabelende 591 weist im Gegensatz zu dem Kabelende 491 keine Markierung auf. Bei dem Kabelende 591 wird das zu identifizierende Merkmal dagegen durch einen Stecker 597 bereitgestellt. Der trainierte Algorithmus ist in solch einer Ausführungsform folglich dazu trainiert, zu erkennen, ob der Stecker 597 an dem Kabelende vorhanden ist oder nicht.

Bei dem Stecker 597 handelt es sich um einen Rundstecker, weshalb das Kabelende 591 nicht in zwei unterschiedlichen Ansichten dargestellt ist. Es versteht sich, dass anstelle eines Rundsteckers jede andere Art von Stecker vorgesehen sein kann.

In einer weiteren Ausführungsform kann auf dem Kabelende 591 ein Stecker montiert sein. Dieser Stecker muss in dieser Ausführungsform allerdings nicht das zu identifizierende Merkmal darstellen. Vielmehr kann eine Markierung auf dem Stecker vorgesehen sein, welche das zu identifizierende Merkmal darstellt. Bei einer solchen Ausführungsform wird also die Markierung auf dem Stecker durch den trainierten Algorithmus erkannt.

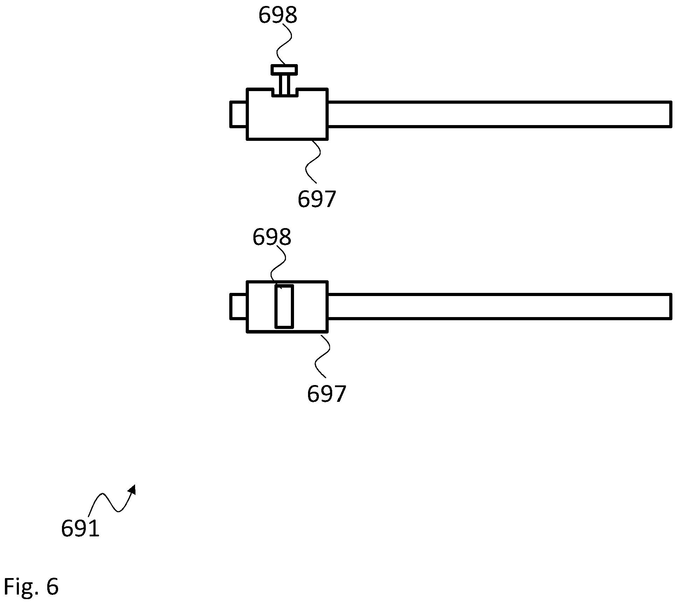

Figur 6 zeigt noch ein weiteres Kabelende 691, wie es in einer der vorstehend in Fig. 1, 2, oder 3 oder nachfolgend in Fig. 8 beispielhaft beschriebenen

Kabelverarbeitungsvorrichtungen 100, 200, 300, 800 verarbeitet werden kann. Bei dem Kabelende 691 ist ein Stecker 697 vorgesehen, welcher allerdings nicht das zu identifizierende Merkmal darstellt. Der Stecker 697 weist vielmehr ein Verriegelungsvorrichtung 698, in diesem Fall eine Sekundärverrieglung, auf. Die Verriegelungsvorrichtung 698 weist einen Steg auf, von welchem aus sich Stifte 699 in den Stecker 697 hinein erstrecken. Diese Stifte 699 greifen formschlüssig in die Kontakte des Steckers 697 und sichern diese so vor einem Herausrutschen aus dem Stecker 697.

In Figur 6 ist die Verriegelungsvorrichtung 698 in geöffnetem Zustand gezeigt, die Stifte 699 sind nicht vollständig in dem Stecker 697 versenkt.

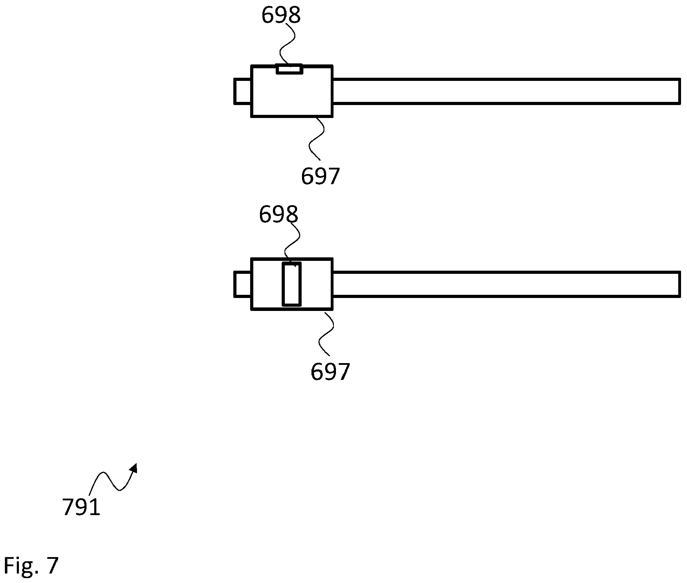

Figur 7 zeigt das Kabelende 691 in verriegeltem Zustand, in dem die Stifte 699 vollständig in dem Stecker 697 versenkt sind. Die Verriegelungsvorrichtung 698 kann z.B. durch ein hineindrücken in den Stecker 697 verriegelt werden.

Wird das zu identifizierende Merkmal durch die Verriegelungsvorrichtung 698 gebildet, kann der trainierte Algorithmus in einer Ausführungsform trainiert sein, das Vorhandensein oder Fehlen der Verriegelungsvorrichtung 698 zu erkennen.

In einer weiteren Ausführungsform kann der trainierte Algorithmus dazu ausgebildet sein, den Zustand der Verriegelungsvorrichtung 698 zu erkennen, also ob diese geöffnet oder verriegelt ist.

Zum besseren Verständnis werden die Bezugszeichen der Figuren 1 bis 7 auch in der folgenden Beschreibung der verfahrensbezogenen Figur 8 genutzt.

Figur 8 zeigt eine weitere Ausführungsform einer Kabelverarbeitungsvorrichtung 800. Die Kabelverarbeitungsvorrichtung 800 basiert auf der Kabelverarbeitungsvorrichtung 300. Die Kabelverarbeitungsvorrichtung 800 weist folglich eine erste Aufnahmeeinrichtung 801-1, eine zweite Aufnahmeeinrichtung 801-2, eine erste Kamera 802-1, eine zweite Kamera 802-2 und eine Auswerteeinrichtung 804 auf. Die Auswerteeinrichtung 804 weist ferner einen trainierten Algorithmus 805 auf. Die zweite Kamera 802-2 und die zweite Aufnahmeeinrichtung 801-2 sind lediglich optional und die Kabelverarbeitungsvorrichtung 800 kann auch nur eine Kamera 802-1 und/oder eine Aufnahmeeinrichtung 301-1 aufweisen. Die Kabelverarbeitungsvorrichtung 800 kann folglich bezüglich der hier angeführten Elemente einer der Kabelverarbeitungsvorrichtungen 100, 200, 300 entsprechen. Es gelten daher die obigen Ausführungen zu den Kabelverarbeitungsvorrichtungen 100, 200, 300 analog für die Kabelverarbeitungsvorrichtung 800.

Die Kabelverarbeitungsvorrichtung 800 weist ferner eine Bildverarbeitungsvorrichtung 810 auf. Die Bildverarbeitungsvorrichtung 810 ist parallel zur Auswerteeinrichtung 804 angeordnet und empfängt die Bilder 803-1, 803-2 von der ersten Kamera 802-1 und, falls vorhanden, von der zweiten Kamera 802-2 parallel zur Auswerteeinrichtung 804.

Die Bildverarbeitungsvorrichtung 810 wertet die empfangenen Bilder 803-1, 803-2 unabhängig von der Auswerteeinrichtung 804 und selbständig aus und erzeugt ein Bildverarbeitungssignal 811, insbesondere exakt ein einziges Bildverarbeitungssignal 811, welches eine Art zweites Steuersignal darstellt. Das Bildverarbeitungssignal 811 kann in einer entsprechenden Verarbeitungsanlage für Kabel als zweites Signal parallel zum Steuersignal 806 ausgewertet werden, welches anzeigt, ob das jeweilige Kabel fehlerfrei ist oder nicht. Eine solche Verarbeitungsanlage für Kabel kann z.B. ein Kabel lediglich dann als fehlerfrei kennzeichnen, wenn sowohl das Steuersignal 806 als auch das Bildverarbeitungssignal 811 ein fehlerfreies Kabel kennzeichnen.

Die Verknüpfung der zwei Signale, also des Steuersignals 806 und des Bildverarbeitungssignals 811 kann auch in der Bildverarbeitungsvorrichtung 810 erfolgen. Dazu kann die Auswerteeinrichtung 804 das Steuersignal 806 der Bildverarbeitungsvorrichtung 810 bereitstellen (gestrichelt dargestellt). Die Bildverarbeitungsvorrichtung 810 kann z.B. eine logische UND-Verknüpfung des Steuersignals 806 und des Bildverarbeitungssignals 811 vornehmen und das UNDverknüpfte Signal an die Kabelverarbeitungsanlage ausgeben.

Die Bildverarbeitungsvorrichtung 810 kann die Bilder 803-1, 803-2 nach vorgegebenen Kriterien auswerten und z.B. eine Mustererkennung, Kantenerkennung oder andere Funktionen bekannter Bildverarbeitungssysteme durchführen, die insbesondere keine künstliche Intelligenz für die Bildauswertung nutzen. Die Bildverarbeitungsvorrichtung 810 kann die empfangenen Bilder 803-1, 803-2 folglich auf das Vorhandensein anderer Merkmale, insbesondere auch mehrerer Merkmale, auswerten, als die Auswerteeinrichtung 804.

Es kann vorgesehen sein, dass die Bildverarbeitungsvorrichtung 810 die unmittelbar aufgenommenen Bilder 803-1, 803-2 bzw. Teilausschnitte der unmittelbar aufgenommenen Bilder 803-1, 803-2 verarbeitet. Für das Bereitstellen des Teilausschnitts der unmittelbar aufgenommenen Bilder 803-1, 803-2 kann zwischen Kameras 802-1, 802-2 und der Bildverarbeitungsvorrichtung 810 noch ein Zwischenprogramm (die Bildbearbeitungssoftware, insbesondere ,Eye Vision Technology' (EVT)) geschaltet sein, dessen einzige Aufgabe darin besteht, die unmittelbar aufgenommenen Bilder 803-1, 803-2 zuzuschneiden und nur einen definierten Ausschnitt als Teilausschnitt oder mehrere definierte Teilausschnitte nacheinander an die Bildverarbeitungsvorrichtung 810 weiterzugeben. Diese Aufgabe des Ausschneidens eines Teilausschnitts aus den unmittelbar aufgenommenen Bildern 803-1, 803-2 kann auch innerhalb der Bildverarbeitungsvorrichtung 810 durchgeführt werden. Es versteht sich aber, dass auch die unmittelbar aufgenommenen Bilder 803-1, 803-2, nicht nur ein Teilausschnitt, in der Bildverarbeitungsvorrichtung 810 ausgewertet werden können. Es kann ein einzelnes Zwischenprogramm vorgesehen sein, welches das Zuschneiden der unmittelbar aufgenommenen Bilder 803-1, 803-2 sowohl für die Bildverarbeitungsvorrichtung 810 als auch die Auswerteeinrichtung 804 durchführt. Ist das Zwischenprogramm in der Bildverarbeitungsvorrichtung 810 integriert, kann diese die jeweiligen Bildausschnitte der Auswerteeinrichtung 804 bereitstellen.

In einer weiteren Ausführung kann der trainierte Algorithmus 805 in der Auswerteeinrichtung 804 trainiert sein, die Bildverarbeitungsvorrichtung 810 zu ersetzen und zusätzlich die Merkmale in den Bildern 803-1, 803-2 zu analysieren, die die Bildverarbeitungsvorrichtung 810 wie oben beschrieben analysiert. Ein solcher trainierter Algorithmus 805 gibt ein positives Steuersignal 806 lediglich dann aus, wenn alle Merkmale in den Bildern 803-1, 803-2 positive geprüft wurden.

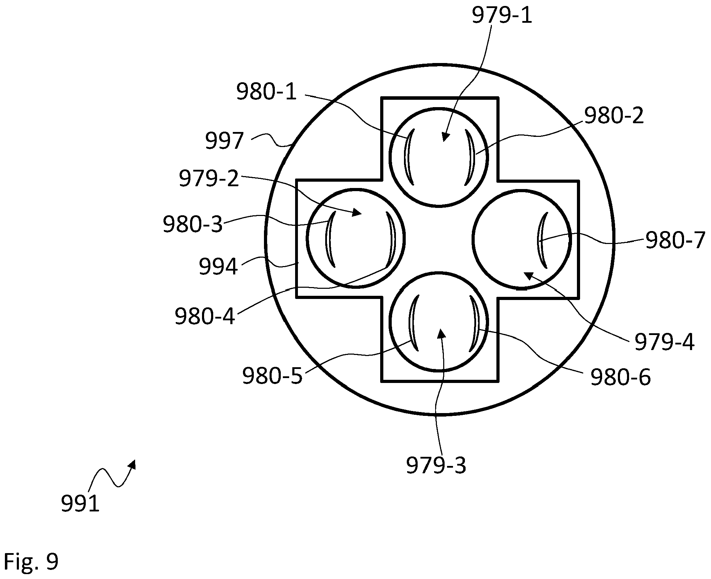

Figur 9 zeigt noch ein weiteres Kabelende 991, wie es in einer der vorstehend in Fig. 1, 2, 3 oder 8 beispielhaft beschriebenen Kabelverarbeitungsvorrichtungen 100, 200, 300, 800 verarbeitet werden kann.

Das Kabelende 991 ist in einer Frontalansicht auf die Längsachse des Kabelendes 991 dargestellt und weist einen Stecker 997 auf, in welchem ein Isolator 994 mit vier Öffnungen 979-1, 979-2, 979-3, 979-4 angeordnet ist. Ein solcher Stecker 997 kann z.B. ein HSD ("High Speed Data") Stecker sein. Bei einem ordnungsgemäß montierten Stecker 997 befinden sich in jeder der vier Öffnungen 979-1, 979-2, 979-3, 979-4 zwei Kontaktzungen 980-1, 980-2, 980-3, 980-4, 980-5, 980-6, 980-7. Es versteht sich, dass die Anzahl von zwei Kontaktzungen 980-1, 980-2, 980-3, 980-4, 980-5, 980-6, 980-7 lediglich beispielhaft gewählt ist und dass mehr als zwei Kontaktzungen 980-1, 980-2, 980-3, 980-4, 980-5, 980-6, 980-7 in jeder der vier Öffnungen 979-1, 979-2, 979-3, 979-4 vorhanden sein können. Ebenfalls versteht sich, dass weniger oder mehr als vier Öffnungen 979-1, 979-2, 979-3, 979-4 vorgesehen sein können.

Der trainierte Algorithmus kann zur Prüfung des Kabelendes 991 dazu ausgebildet sein, zu erkennen, ob in jeder der vier Öffnungen 979-1, 979-2, 979-3, 979-4 eine entsprechende Anzahl an Kontaktzungen 980-1, 980-2, 980-3, 980-4, 980-5, 980-6, 980-7, also hier z.B. zwei, vorhanden sind.

Der trainierte Algorithmus kann trainiert sein, jeweils für das Bild einer einzigen der vier Öffnungen 979-1, 979-2, 979-3, 979-4, also einen entsprechenden Ausschnitt eines Gesamtbildes des Kabelendes 991, zu erkennen, ob in der jeweiligen Öffnung 979-1, 979-2, 979-3, 979-4 die entsprechende Anzahl an Kontaktzungen 980-1, 980-2, 980-3, 980-4, 980-5, 980-6, 980-7 vorhanden ist. Die entsprechenden Ausschnitte des Gesamtbildes können z.B. von einem Zwischenprogramm, wie es oben bereits beschrieben wurde, erzeugt werden.

Die Ergebnisse des trainierten Algorithmus für alle vier Öffnungen 979-1, 979-2, 979-3, 979-4 können anschließend zu einem Gesamtergebnis zusammengefasst werden und als Steuersignal ausgegeben werden. Dabei können alle Teilergebnisse mittels einer logischen UND-Verknüpfung verknüpft werden. Ein positives Gesamtergebnis wird folglich nur dann ausgegeben, wenn alle Teilergebnisse positiv sind.

Wie in Figur 9 zu erkennen, ist bei der rechten Öffnung 979-4 der vier Öffnungen 979-1, 979-2, 979-3, 979-4 lediglich eine Kontaktzunge 980-7 in der Öffnung 979-4 angeordnet. Der trainierte Algorithmus würde folglich für die drei Öffnungen 979-1, 979-2, 979-3 jeweils zwei Kontaktzungen 980-1, 980-2, 980-3, 980-4, 980-5, 980-6 erkennen und diese als fehlerfrei identifizieren. Der trainierte Algorithmus würde in der vierten Öffnung 979-4 allerdings lediglich eine Kontaktzunge 980-7 erkennen und damit diese als nicht-fehlerfrei bzw. fehlerhaft identifizieren. Das ausgegebene Gesamtergebnis würde damit negativ ausfallen und das Kabelende 991 als defekt bewertet.

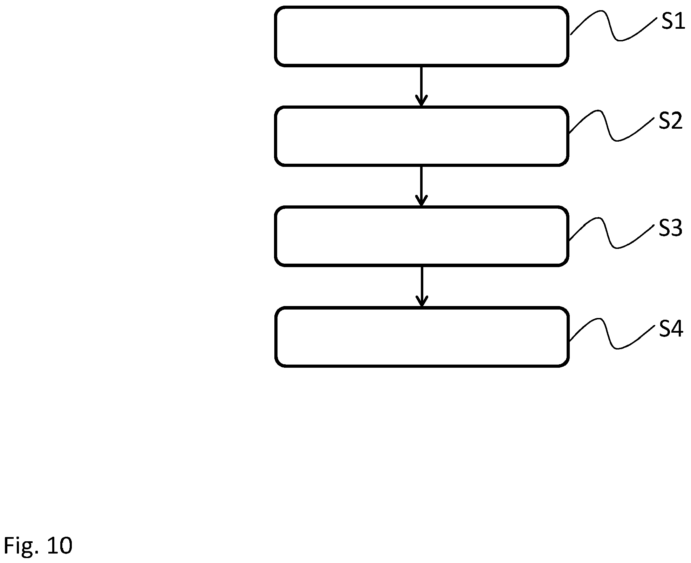

Figur 10 zeigt ein Ablaufdiagramm eines Verfahrens zur automatischen Verarbeitung von Kabeln 190.

In einem ersten Schritt S1 wird mindestens ein Kabelende 191, 291-1, 291-2, 391-1, 391-2, 491, 591, 691, 891-1, 891-2, 991 eines Kabels 190 in einer vorgegebenen Position fixiert. In Schritt S2 wird zumindest ein Bild 103, 203, 303-1, 303-2, 803-1, 803-2 des mindestens einen Kabelendes 191, 291-1, 291-2, 391-1, 391-2, 491, 591, 691, 891-1, 891-2, 991 aufgenommen. In Schritt S3 wird ein trainierter Algorithmus 105, 205, 305, 805 auf das zumindest eine Bild 103, 203, 303-1, 303-2, 803-1, 803-2 angewandt. Insbesondere ist vorgesehen, dass der Anwendung des trainierten Algorithmus 105, 205, 305, 805 in Schritt S3 unmittelbar, ohne weitere Zwischenschritte, das zuvor in Schritt S2 aufgenommene Bild 103, 203. 303-1, 303-2 des mindestens einen Kabelendes bereitgestellt wird. Schließlich wird in Schritt S4 ein Steuersignal 106, 206, 306, 806 auf Basis von zumindest einem von dem trainierten Algorithmus 105, 205, 305, 805 ausgegebenen Ergebnis erzeugt und ausgegeben.

Der vorstehend in Bezug auf die Ausführungsbeispiele aus Fig. 1, 2 und 3 erwähnte trainierte Algorithmus 105, 205, 305, 805 kann z.B. ein neuronales Netzwerk, insbesondere ein Convolutional Neural Network, aufweisen. Ein solcher trainierter Algorithmus 105, 205, 305, 805 kann z.B. jeweils ein vorgegebenes Merkmal 196, 496 in dem zumindest einen Bild 103, 203, 303-1, 303-2, 803-1, 803-2 identifizieren und ein positives Ergebnis ausgeben, wenn das vorgegebene Merkmal 196, 496 in dem Bild 103, 203, 303-1, 303-2, 803-1, 803-2 identifizierbar ist.

In einer Ausführungsform können Bilder 103, 203, 303-1, 303-2, 803-1, 803-2 entweder in einer Draufsicht auf das jeweilige Kabelende 191, 291-1, 291-2, 391-1, 391-2, 491, 591, 691, 891-1, 891-2, 991 oder in einer perspektivischen Sicht auf das jeweilige Kabelende 191, 291-1, 291-2, 391-1, 391-2, 491, 591, 691, 891-1, 891-2, 991 aufgenommen werden. In einer weiteren Ausführungsform können Bilder 103, 203, 303-1, 303-2, 803-1, 803-2 sowohl in einer Draufsicht auf das jeweilige Kabelende 191, 291-1, 291-2, 391-1, 391-2, 491, 591, 691, 891-1, 891-2, 991 als auch in einer perspektivischen Sicht auf das jeweilige Kabelende 191, 291-1, 291-2, 391-1, 391-2, 491, 591, 691, 891-1, 891-2, 991 aufgenommen werden.

In einer Ausführungsform kann das vorgegebene Merkmal 196, 496 eine Markierung an dem Kabelende 191, 291-1, 291-2, 391-1, 391-2, 491, 591, 691, 891-1, 891-2, 991 aufweisen. Der trainierte Algorithmus 105, 205, 305, 805 kann in solch einer Ausführungsform trainiert sein, die Markierung an dem Kabelende 191, 291-1, 291-2, 391-1, 391-2, 491, 591, 691, 891-1, 891-2, 991 zu identifizieren. Ein positives Steuersignal 106, 206, 306, 806 kann insbesondere dann ausgegeben werden, wenn die Markierung an exakt einem Kabelende 191, 291-1, 291-2, 391-1, 391-2, 491, 591, 691, 891-1, 891-2, 991 in zumindest einem der Bilder 103, 203, 303-1, 303-2, 803-1, 803-2 identifiziert wird. Ein Fehlersignal kann ausgegeben werden, wenn die Markierung nicht an exakt einem Kabelende 191, 291-1, 291-2, 391-1, 391-2, 491, 591, 691, 891-1, 891-2, 991 in zumindest einem der Bilder 103, 203, 303-1, 303-2, 803-1, 803-2 identifiziert wird.

In einer weiteren Ausführungsform kann das vorgegebene Merkmal 196, 496 eine Verriegelungsvorrichtung 698, insbesondere eine Kontaktverriegelungsvorrichtung 698, aufweisen. Der trainierte Algorithmus 105, 205, 305, 805 kann trainiert sein, das Vorhandensein der Verriegelungsvorrichtung 698 an dem Kabelende 191, 291-1, 291-2, 391-1, 391-2, 491, 591, 691, 891-1, 891-2, 991 zu identifizieren. Ein positives Steuersignal 106, 206, 306, 806 kann insbesondere ausgegeben werden, wenn die Verriegelungsvorrichtung 698 in zumindest einem der Bilder 103, 203, 303-1, 303-2, 803-1, 803-2 identifiziert wird. Ein Fehlersignal kann ausgegeben werden, wenn die vorgegebene Markierung nicht in zumindest einem der Bilder 103, 203, 303-1, 303-2, 803-1, 803-2 identifiziert wird.

In noch einer Ausführungsform kann das vorgegebene Merkmal 196, 496 den Zustand einer Verriegelungsvorrichtung 698, insbesondere einer Kontaktverriegelungsvorrichtung 698, kennzeichnen. Der trainierte Algorithmus 105, 205, 305, 805 kann trainiert sein, den Zustand der Verriegelungsvorrichtung 698 an dem Kabelende 191, 291-1, 291-2, 391-1, 391-2, 491, 591, 691, 891-1, 891-2, 991 zu identifizieren. Ein positives Steuersignal 106, 206, 306, 806 kann ausgegeben werden, wenn der Zustand der Verriegelungsvorrichtung 698 in zumindest einem der Bilder 103, 203, 303-1, 303-2, 803-1, 803-2 als verriegelter Zustand identifiziert wird. Ein Fehlersignal kann ausgegeben werden, wenn der Zustand nicht als verriegelter Zustand identifiziert wird. Alternativ kann ein Fehlersignal ausgegeben werden, wenn der Zustand der Verriegelungsvorrichtung 698 in zumindest einem der Bilder 103, 203, 303-1, 303-2, 803-1, 803-2 als verriegelter Zustand identifiziert wird. Ein positives Steuersignal 106, 206, 306, 806 kann ausgegeben werden, wenn der Zustand nicht als verriegelter Zustand identifiziert wird.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 100, 200, 300, 800: Kabelverarbeitungsvorrichtung
- 101, 201-1, 201-2, 301-1, 301-2: Aufnahmeeinrichtung
- 801-1,801-2: Aufnahmeeinrichtung
- 102, 202, 302-1, 302-2, 802-1, 802-2: Bildaufnahmeeinrichtung
- 103, 203, 303-1, 303-2, 803-1, 803-2: Bild
- 104, 204, 304, 804: Auswerteeinrichtung
- 105, 205, 305, 805: trainierter Algorithmus
- 106, 206, 306, 806: Steuersignal

- 810: Bildverarbeitungsvorrichtung
- 811: Bildverarbeitungssignal

- 190: Kabel
- 191, 291-1, 291-2, 391-1, 391-2: Kabelende
- 491, 591, 691, 891-1, 891-2, 991: Kabelende
- 192, 492: Mantel
- 193, 493: Schirmung
- 194, 494, 994: Isolator
- 195, 495: Leiter
- 196, 496: Merkmal
- 597, 697, 997: Stecker
- 698: Verriegelungsvorrichtung
- 699: Stift
- 979-1, 979-2, 979-3, 979-4: Öffnung
- 980-1, 980-2, 980-3, 980-4, 980-5: Kontaktzunge
- 980-6, 980-7: Kontaktzunge

- S1, S2, S3, S4: Verfahrensschritte

## Patentansprüche

1. Kabelverarbeitungsvorrichtung (100, 200, 300, 800) aufweisend:
eine erste Aufnahmeeinrichtung (101, 201-1, 301-1, 801-1), welche ausgebildet ist, ein erstes Kabelende (191, 291-1, 391-1, 491, 591, 691, 891-1, 891-2, 991) eines Kabels (190) aufzunehmen und in einer vorgegebenen Position zu fixieren;
eine Bildaufnahmeeinrichtung (102, 202, 302-1, 302-2, 802-1, 802-2), welche ausgebildet ist, zumindest ein Bild (103, 203, 303-1, 303-2, 803-1, 803-2) des ersten Kabelendes (191, 291-1, 391-1, 491, 591, 691, 891-1, 891-2, 991) aufzunehmen; und
eine Auswerteeinrichtung (104, 204, 304, 804), welche ausgebildet ist, auf das zumindest eine Bild (103, 203, 303-1, 303-2, 803-1, 803-2) einen trainierten Algorithmus (105, 205, 305, 805) anzuwenden, und auf Basis von zumindest einem von dem trainierten Algorithmus (105, 205, 305, 805) ausgegebenen Ergebnis ein Steuersignal (106, 206, 306, 806) zu erzeugen und auszugeben;
wobei der trainierte Algorithmus (105, 205, 305, 805) ausgebildet ist, jeweils ein vorgegebenes Merkmal (196, 496) in dem zumindest einen Bild (103, 203, 303-1, 303-2, 803-1, 803-2) zu identifizieren und ein positives Ergebnis auszugeben, wenn das vorgegebene Merkmal (196, 496) in dem Bild (103, 203, 303-1, 303-2, 803-1, 803-2) identifizierbar ist.

2. Kabelverarbeitungsvorrichtung (100, 200, 300, 800) gemäß dem vorhergehenden Anspruch, aufweisend eine zweite Aufnahmeeinrichtung (201-2, 301-2, 801-2), welche ausgebildet ist, ein zweites Kabelende (291-1, 291-2, 391-2, 491, 591, 691, 891-1, 891-2, 991) des Kabels (190) aufzunehmen und in einer vorgegebenen Position zu fixieren;
wobei die Bildaufnahmeeinrichtung (102, 202, 302-1, 302-2, 802-1, 802-2) ferner ausgebildet ist, zumindest ein Bild (103, 203, 303-1, 303-2, 803-1, 803-2) des zweiten Kabelendes (291-1, 291-2, 391-2, 491, 591, 691, 891-1, 891-2, 991) aufzunehmen.

3. Kabelverarbeitungsvorrichtung (100, 200, 300, 800) gemäß einem der vorhergehenden Ansprüche, wobei die Bildaufnahmeeinrichtung (102, 202, 302-1, 302-2, 802-1, 802-2) eine erste Kamera (102, 202, 302-1) aufweist, welche ausgebildet ist, Bilder (103, 203, 303-1, 303-2, 803-1, 803-2) in einer Draufsicht auf das jeweilige Kabelende (191, 291-1, 291-2, 391-1, 391-2, 491, 591, 691, 891-1, 891-2, 991) aufzunehmen.

4. Kabelverarbeitungsvorrichtung (100, 200, 300, 800) gemäß dem vorhergehenden Anspruch, wobei die Bildaufnahmeeinrichtung (102, 202, 302-1, 302-2, 802-1, 802-2) eine zweite Kamera (302-2) aufweist, welche ausgebildet ist, Bilder (103, 203, 303-1, 303-2, 803-1, 803-2) in einer perspektivischen Sicht auf das jeweilige Kabelende (191, 291-1, 291-2, 391-1, 391-2, 491, 591, 691, 891-1, 891-2, 991) aufzunehmen.

5. Kabelverarbeitungsvorrichtung (100, 200, 300, 800) gemäß einem der vorhergehenden Ansprüche, wobei der trainierte Algorithmus (105, 205, 305, 805) ein neuronales Netzwerk, insbesondere ein Convolutional Neural Network, aufweist.

6. Kabelverarbeitungsvorrichtung (100, 200, 300, 800) gemäß einem der vorhergehenden Ansprüche, wobei das vorgegebene Merkmal (196, 496) eine Markierung an dem Kabelende (191, 291-1, 291-2, 391-1, 391-2, 491, 591, 691, 891-1, 891-2, 991) aufweist und der trainierte Algorithmus (105, 205, 305, 805) trainiert ist, die Markierung an dem Kabelende (191, 291-1, 291-2, 391-1, 391-2, 491, 591, 691, 891-1, 891-2, 991) zu identifizieren.

7. Kabelverarbeitungsvorrichtung (100, 200, 300, 800) gemäß dem vorhergehenden Anspruch und Anspruch 4, wobei die Auswerteeinrichtung (104, 204, 304, 804) ausgebildet ist, ein positives Steuersignal (106, 206, 306, 806) auszugeben, wenn die Markierung an exakt einem Kabelende (191, 291-1, 291-2, 391-1, 391-2, 491, 591, 691, 891-1, 891-2, 991) in den Bildern (103, 203, 303-1, 303-2, 803-1, 803-2) einer der zwei Kameras identifiziert wird, und ein Fehlersignal auszugeben, wenn die Markierung nicht an exakt einem Kabelende (191, 291-1, 291-2, 391-1, 391-2, 491, 591, 691, 891-1, 891-2, 991) in den Bildern (103, 203, 303-1, 303-2, 803-1, 803-2) einer der zwei Kameras identifiziert wird.

8. Kabelverarbeitungsvorrichtung (100, 200, 300, 800) gemäß einem der vorhergehenden Ansprüche 1 bis 5, wobei das vorgegebene Merkmal (196, 496) eine Verriegelungsvorrichtung (698), insbesondere eine Kontaktverriegelungsvorrichtung (698), aufweist und der trainierte Algorithmus (105, 205, 305, 805) trainiert ist, das Vorhandensein der Verriegelungsvorrichtung (698) an dem Kabelende (191, 291-1, 291-2, 391-1, 391-2, 491, 591, 691, 891-1, 891-2, 991) zu identifizieren.

9. Kabelverarbeitungsvorrichtung (100, 200, 300, 800) gemäß dem vorhergehenden Anspruch, wobei die Auswerteeinrichtung (104, 204, 304, 804) ausgebildet ist, ein positives Steuersignal (106, 206, 306, 806) auszugeben, wenn die Verriegelungsvorrichtung (698) in zumindest einem der Bilder (103, 203, 303-1, 303-2, 803-1, 803-2) identifiziert wird, und ein Fehlersignal auszugeben, wenn die Verriegelungsvorrichtung (698) nicht in zumindest einem der Bilder (103, 203, 303-1, 303-2, 803-1, 803-2) identifiziert wird.

10. Kabelverarbeitungsvorrichtung (100, 200, 300, 800) gemäß einem der vorhergehenden Ansprüche 1 bis 5, wobei das vorgegebene Merkmal (196, 496) den Zustand einer Verriegelungsvorrichtung (698), insbesondere einer Kontaktverriegelungsvorrichtung (698), kennzeichnet und der trainierte Algorithmus (105, 205, 305, 805) trainiert ist, den Zustand der Verriegelungsvorrichtung (698) an dem Kabelende (191, 291-1, 291-2, 391-1, 391-2, 491, 591, 691, 891-1, 891-2, 991) zu identifizieren.

11. Kabelverarbeitungsvorrichtung (100, 200, 300, 800) gemäß dem vorhergehenden Anspruch, wobei die Auswerteeinrichtung (104, 204, 304, 804) ausgebildet ist, ein positives Steuersignal (106, 206, 306, 806) auszugeben, wenn der Zustand der Verriegelungsvorrichtung (698) in zumindest einem der Bilder (103, 203, 303-1, 303-2, 803-1, 803-2) als verriegelter Zustand identifiziert wird, und ein Fehlersignal auszugeben, wenn der Zustand nicht als verriegelter Zustand identifiziert wird; oder wobei die Auswerteeinrichtung (104, 204, 304, 804) ausgebildet ist, ein Fehlersignal auszugeben, wenn der Zustand der Verriegelungsvorrichtung (698) in zumindest einem der Bilder (103, 203, 303-1, 303-2, 803-1, 803-2) als verriegelter Zustand identifiziert wird, und ein positives Steuersignal (106, 206, 306, 806) auszugeben, wenn der Zustand nicht als verriegelter Zustand identifiziert wird.

12. Verfahren zur automatischen Verarbeitung von Kabeln (190), aufweisend:
Fixieren (S1) mindestens eines Kabelendes (191, 291-1, 291-2, 391-1, 391-2, 491, 591, 691, 891-1, 891-2, 991) eines Kabels (190) in einer vorgegebenen Position;
Aufnehmen (S2) zumindest eines Bildes (103, 203, 303-1, 303-2, 803-1, 803-2) des mindestens einen Kabelendes (191, 291-1, 291-2, 391-1, 391-2, 491, 591, 691, 891-1, 891-2, 991);
Anwenden (S3) eines trainierten Algorithmus (105, 205, 305, 805) auf das zumindest eine Bild (103, 203, 303-1, 303-2, 803-1, 803-2), wobei der trainierte Algorithmus (105, 205, 305, 805) ausgebildet ist, jeweils ein vorgegebenes Merkmal (196, 496) in dem zumindest einen Bild (103, 203, 303-1, 303-2, 803-1, 803-2) zu identifizieren und ein positives Ergebnis auszugeben, wenn das vorgegebene Merkmal (196, 496) in dem Bild (103, 203, 303-1, 303-2, 803-1, 803-2) identifizierbar ist; und
Erzeugen (S4) und Ausgeben eines Steuersignals (106, 206, 306, 806) auf Basis von zumindest einem von dem trainierten Algorithmus (105, 205, 305, 805) ausgegebenen Ergebnis.

13. Verfahren gemäß dem vorhergehenden Anspruch, wobei die Bilder (103, 203, 303-1, 303-2, 803-1, 803-2) in einer Draufsicht auf das jeweilige Kabelende (191, 291-1, 291-2, 391-1, 391-2, 491, 591, 691, 891-1, 891-2, 991) aufgenommen werden; und/oder
Wobei die Bilder (103, 203, 303-1, 303-2, 803-1, 803-2) in einer perspektivischen Sicht auf das jeweilige Kabelende (191, 291-1, 291-2, 391-1, 391-2, 491, 591, 691, 891-1, 891-2, 991) aufgenommen werden.

14. Verfahren gemäß einem der vorhergehenden verfahrensbezogenen Ansprüche,
wobei das vorgegebene Merkmal (196, 496) eine Markierung an dem Kabelende (191, 291-1, 291-2, 391-1, 391-2, 491, 591, 691, 891-1, 891-2, 991) aufweist und der trainierte Algorithmus (105, 205, 305, 805) trainiert ist, die Markierung an dem Kabelende (191, 291-1, 291-2, 391-1, 391-2, 491, 591, 691, 891-1, 891-2, 991) zu identifizieren, und insbesondere wobei, ein positives Steuersignal (106, 206, 306, 806) ausgegeben wird, wenn die Markierung an exakt einem Kabelende (191, 291-1, 291-2, 391-1, 391-2, 491, 591, 691, 891-1, 891-2, 991) in zumindest einem der Bilder (103, 203, 303-1, 303-2, 803-1, 803-2) identifiziert wird, und ein Fehlersignal ausgegeben wird, wenn die Markierung nicht an exakt einem Kabelende (191, 291-1, 291-2, 391-1, 391-2, 491, 591, 691, 891-1, 891-2, 991) in zumindest einem der Bilder (103, 203, 303-1, 303-2, 803-1, 803-2) identifiziert wird; oder
wobei das vorgegebene Merkmal (196, 496) eine Verriegelungsvorrichtung (698), insbesondere eine Kontaktverriegelungsvorrichtung (698), aufweist und der trainierte Algorithmus (105, 205, 305, 805) trainiert ist, das Vorhandensein der Verriegelungsvorrichtung (698) an dem Kabelende (191, 291-1, 291-2, 391-1, 391-2, 491, 591, 691, 891-1, 891-2, 991) zu identifizieren, und insbesondere wobei ein positives Steuersignal (106, 206, 306, 806) ausgegeben wird, wenn die Verriegelungsvorrichtung (698) in zumindest einem der Bilder (103, 203, 303-1, 303-2, 803-1, 803-2) identifiziert wird, und ein Fehlersignal ausgegeben wird, wenn die vorgegebene Markierung nicht in zumindest einem der Bilder (103, 203, 303-1, 303-2, 803-1, 803-2) identifiziert wird; oder
wobei das vorgegebene Merkmal (196, 496) den Zustand einer Verriegelungsvorrichtung (698), insbesondere einer Kontaktverriegelungsvorrichtung (698), kennzeichnet und der trainierte Algorithmus (105, 205, 305, 805) trainiert ist, den Zustand der Verriegelungsvorrichtung (698) an dem Kabelende (191, 291-1, 291-2, 391-1, 391-2, 491, 591, 691, 891-1, 891-2, 991) zu identifizieren, und insbesondere wobei ein positives Steuersignal (106, 206, 306, 806) ausgegeben wird, wenn der Zustand der Verriegelungsvorrichtung (698) in zumindest einem der Bilder (103, 203, 303-1, 303-2, 803-1, 803-2) als verriegelter Zustand identifiziert wird, und ein Fehlersignal ausgegeben wird, wenn der Zustand nicht als verriegelter Zustand identifiziert wird, oder wobei ein Fehlersignal ausgegeben wird, wenn der Zustand der Verriegelungsvorrichtung (698) in zumindest einem der Bilder (103, 203, 303-1, 303-2, 803-1, 803-2) als verriegelter Zustand identifiziert wird, und ein positives Steuersignal (106, 206, 306, 806) ausgegeben wird, wenn der Zustand nicht als verriegelter Zustand identifiziert wird.

15. Nichtflüchtiges Computerprogrammprodukt, welches Anweisungen aufweist, welche, wenn sie durch eine Recheneinrichtung ausgeführt werden, die Recheneinrichtung veranlassen ein Verfahren nach einem der vorherigen verfahrensbezogenen Ansprüche auszuführen.

## Geänderte Patentansprüche

### Geänderte Patentansprüche gemäss Regel 137(2) EPÜ.

1. Kabelverarbeitungsvorrichtung (100, 200, 300, 800) aufweisend:
eine erste Aufnahmeeinrichtung (101, 201-1, 301-1, 801-1), welche ausgebildet ist, ein erstes Kabelende (191, 291-1, 391-1, 491, 591, 691, 891-1, 891-2, 991) eines Kabels (190) aufzunehmen und in einer vorgegebenen Position zu fixieren;
eine Bildaufnahmeeinrichtung (102, 202, 302-1, 302-2, 802-1, 802-2), welche ausgebildet ist, zumindest ein Bild (103, 203, 303-1, 303-2, 803-1, 803-2) des ersten Kabelendes (191, 291-1, 391-1, 491, 591, 691, 891-1, 891-2, 991) aufzunehmen; und
eine Auswerteeinrichtung (104, 204, 304, 804), welche ausgebildet ist, auf das zumindest eine Bild (103, 203, 303-1, 303-2, 803-1, 803-2) einen trainierten Algorithmus (105, 205, 305, 805) anzuwenden, und auf Basis von zumindest einem von dem trainierten Algorithmus (105, 205, 305, 805) ausgegebenen Ergebnis ein Steuersignal (106, 206, 306, 806) zu erzeugen und auszugeben;
wobei der trainierte Algorithmus (105, 205, 305, 805) ausgebildet ist, jeweils ein vorgegebenes Merkmal (196, 496) in dem zumindest einen Bild (103, 203, 303-1, 303-2, 803-1, 803-2) zu identifizieren und ein positives Ergebnis auszugeben, wenn das vorgegebene Merkmal (196, 496) in dem Bild (103, 203, 303-1, 303-2, 803-1, 803-2) identifizierbar ist und ein negatives Ergebnis auszugeben, wenn das vorgegebene Merkmal (196, 496) nicht in dem Bild (103, 203, 303-1, 303-2, 803-1, 803-2) identifizierbar ist.;
wobei die Auswerteeinrichtung (104, 204, 304, 804) ausgebildet ist, den trainierten Algorithmus (105, 205, 305, 805) unmittelbar auf das aufgenommene zumindest eine Bild (103, 203, 303-1, 303-2, 803-1, 803-2) anzuwenden, so dass der trainierte Algorithmus (105, 205, 305, 805) das zumindest eine Bild (103, 203, 303-1, 303-2, 803-1, 803-2) selbst auswertet und das zumindest eine Bild (103, 203, 303-1, 303-2, 803-1, 803-2) keiner nachgelagerten Bildverarbeitung unterzogen werden muss, bevor das zumindest eine Bild (103, 203, 303-1, 303-2, 803-1, 803-2) ausgewertet werden kann.

2. Kabelverarbeitungsvorrichtung (100, 200, 300, 800) gemäß dem vorhergehenden Anspruch, aufweisend eine zweite Aufnahmeeinrichtung (201-2, 301-2, 801-2), welche ausgebildet ist, ein zweites Kabelende (291-1, 291-2, 391-2, 491, 591, 691, 891-1, 891-2, 991) des Kabels (190) aufzunehmen und in einer vorgegebenen Position zu fixieren;
wobei die Bildaufnahmeeinrichtung (102, 202, 302-1, 302-2, 802-1, 802-2) ferner ausgebildet ist, zumindest ein Bild (103, 203, 303-1, 303-2, 803-1, 803-2) des zweiten Kabelendes (291-1, 291-2, 391-2, 491, 591, 691, 891-1, 891-2, 991) aufzunehmen.

3. Kabelverarbeitungsvorrichtung (100, 200, 300, 800) gemäß einem der vorhergehenden Ansprüche, wobei die Bildaufnahmeeinrichtung (102, 202, 302-1, 302-2, 802-1, 802-2) eine erste Kamera (102, 202, 302-1) aufweist, welche ausgebildet ist, Bilder (103, 203, 303-1, 303-2, 803-1, 803-2) in einer Draufsicht auf das jeweilige Kabelende (191, 291-1, 291-2, 391-1, 391-2, 491, 591, 691, 891-1, 891-2, 991) aufzunehmen.

4. Kabelverarbeitungsvorrichtung (100, 200, 300, 800) gemäß dem vorhergehenden Anspruch, wobei die Bildaufnahmeeinrichtung (102, 202, 302-1, 302-2, 802-1, 802-2) eine zweite Kamera (302-2) aufweist, welche ausgebildet ist, Bilder (103, 203, 303-1, 303-2, 803-1, 803-2) in einer perspektivischen Sicht auf das jeweilige Kabelende (191, 291-1, 291-2, 391-1, 391-2, 491, 591, 691, 891-1, 891-2, 991) aufzunehmen.

5. Kabelverarbeitungsvorrichtung (100, 200, 300, 800) gemäß einem der vorhergehenden Ansprüche, wobei der trainierte Algorithmus (105, 205, 305, 805) ein neuronales Netzwerk, insbesondere ein Convolutional Neural Network, aufweist.

6. Kabelverarbeitungsvorrichtung (100, 200, 300, 800) gemäß einem der vorhergehenden Ansprüche, wobei das vorgegebene Merkmal (196, 496) eine Markierung an dem Kabelende (191, 291-1, 291-2, 391-1, 391-2, 491, 591, 691, 891-1, 891-2, 991) aufweist und der trainierte Algorithmus (105, 205, 305, 805) trainiert ist, die Markierung an dem Kabelende (191, 291-1, 291-2, 391-1, 391-2, 491, 591, 691, 891-1, 891-2, 991) zu identifizieren.

7. Kabelverarbeitungsvorrichtung (100, 200, 300, 800) gemäß dem vorhergehenden Anspruch und Anspruch 4, wobei die Auswerteeinrichtung (104, 204, 304, 804) ausgebildet ist, ein positives Steuersignal (106, 206, 306, 806) auszugeben, wenn die Markierung an exakt einem Kabelende (191, 291-1, 291-2, 391-1, 391-2, 491, 591, 691, 891-1, 891-2, 991) in den Bildern (103, 203, 303-1, 303-2, 803-1, 803-2) einer der zwei Kameras identifiziert wird, und ein Fehlersignal auszugeben, wenn die Markierung nicht an exakt einem Kabelende (191, 291-1, 291-2, 391-1, 391-2, 491, 591, 691, 891-1, 891-2, 991) in den Bildern (103, 203, 303-1, 303-2, 803-1, 803-2) einer der zwei Kameras identifiziert wird.

8. Kabelverarbeitungsvorrichtung (100, 200, 300, 800) gemäß einem der vorhergehenden Ansprüche 1 bis 5, wobei das vorgegebene Merkmal (196, 496) eine Verriegelungsvorrichtung (698), insbesondere eine Kontaktverriegelungsvorrichtung (698), aufweist und der trainierte Algorithmus (105, 205, 305, 805) trainiert ist, das Vorhandensein der Verriegelungsvorrichtung (698) an dem Kabelende (191, 291-1, 291-2, 391-1, 391-2, 491, 591, 691, 891-1, 891-2, 991) zu identifizieren.

9. Kabelverarbeitungsvorrichtung (100, 200, 300, 800) gemäß dem vorhergehenden Anspruch, wobei die Auswerteeinrichtung (104, 204, 304, 804) ausgebildet ist, ein positives Steuersignal (106, 206, 306, 806) auszugeben, wenn die Verriegelungsvorrichtung (698) in zumindest einem der Bilder (103, 203, 303-1, 303-2, 803-1, 803-2) identifiziert wird, und ein Fehlersignal auszugeben, wenn die Verriegelungsvorrichtung (698) nicht in zumindest einem der Bilder (103, 203, 303-1, 303-2, 803-1, 803-2) identifiziert wird.

10. Kabelverarbeitungsvorrichtung (100, 200, 300, 800) gemäß einem der vorhergehenden Ansprüche 1 bis 5, wobei das vorgegebene Merkmal (196, 496) den Zustand einer Verriegelungsvorrichtung (698), insbesondere einer Kontaktverriegelungsvorrichtung (698), kennzeichnet und der trainierte Algorithmus (105, 205, 305, 805) trainiert ist, den Zustand der Verriegelungsvorrichtung (698) an dem Kabelende (191, 291-1, 291-2, 391-1, 391-2, 491, 591, 691, 891-1, 891-2, 991) zu identifizieren.

11. Kabelverarbeitungsvorrichtung (100, 200, 300, 800) gemäß dem vorhergehenden Anspruch, wobei die Auswerteeinrichtung (104, 204, 304, 804) ausgebildet ist, ein positives Steuersignal (106, 206, 306, 806) auszugeben, wenn der Zustand der Verriegelungsvorrichtung (698) in zumindest einem der Bilder (103, 203, 303-1, 303-2, 803-1, 803-2) als verriegelter Zustand identifiziert wird, und ein Fehlersignal auszugeben, wenn der Zustand nicht als verriegelter Zustand identifiziert wird; oder wobei die Auswerteeinrichtung (104, 204, 304, 804) ausgebildet ist, ein Fehlersignal auszugeben, wenn der Zustand der Verriegelungsvorrichtung (698) in zumindest einem der Bilder (103, 203, 303-1, 303-2, 803-1, 803-2) als verriegelter Zustand identifiziert wird, und ein positives Steuersignal (106, 206, 306, 806) auszugeben, wenn der Zustand nicht als verriegelter Zustand identifiziert wird.

12. Verfahren zur automatischen Verarbeitung von Kabeln (190), aufweisend:
Fixieren (S1) mindestens eines Kabelendes (191, 291-1, 291-2, 391-1, 391-2, 491, 591, 691, 891-1, 891-2, 991) eines Kabels (190) in einer vorgegebenen Position;
Aufnehmen (S2) zumindest eines Bildes (103, 203, 303-1, 303-2, 803-1, 803-2) des mindestens einen Kabelendes (191, 291-1, 291-2, 391-1, 391-2, 491, 591, 691, 891-1, 891-2, 991);
Anwenden (S3) eines trainierten Algorithmus (105, 205, 305, 805) auf das zumindest eine Bild (103, 203, 303-1, 303-2, 803-1, 803-2), wobei der trainierte Algorithmus (105, 205, 305, 805) ausgebildet ist, jeweils ein vorgegebenes Merkmal (196, 496) in dem zumindest einen Bild (103, 203, 303-1, 303-2, 803-1, 803-2) zu identifizieren und ein positives Ergebnis auszugeben, wenn das vorgegebene Merkmal (196, 496) in dem Bild (103, 203, 303-1, 303-2, 803-1, 803-2) identifizierbar ist und ein negatives Ergebnis auszugeben, wenn das vorgegebene Merkmal (196, 496) nicht in dem Bild (103, 203, 303-1, 303-2, 803-1, 803-2) identifizierbar ist,
wobei der trainierte Algorithmus (105, 205, 305, 805) unmittelbar auf das aufgenommene zumindest eine Bild (103, 203, 303-1, 303-2, 803-1, 803-2) angewendet wird, so dass der trainierte Algorithmus (105, 205, 305, 805) das zumindest eine Bild (103, 203, 303-1, 303-2, 803-1, 803-2) selbst auswertet und das zumindest eine Bild (103, 203, 303-1, 303-2, 803-1, 803-2) keiner nachgelagerten Bildverarbeitung unterzogen werden muss, bevor das zumindest eine Bild (103, 203, 303-1, 303-2, 803-1, 803-2) ausgewertet werden kann; und
Erzeugen (S4) und Ausgeben eines Steuersignals (106, 206, 306, 806) auf Basis von zumindest einem von dem trainierten Algorithmus (105, 205, 305, 805) ausgegebenen Ergebnis.

13. Verfahren gemäß dem vorhergehenden Anspruch, wobei die Bilder (103, 203, 303-1, 303-2, 803-1, 803-2) in einer Draufsicht auf das jeweilige Kabelende (191, 291-1, 291-2, 391-1, 391-2, 491, 591, 691, 891-1, 891-2, 991) aufgenommen werden; und/oder
Wobei die Bilder (103, 203, 303-1, 303-2, 803-1, 803-2) in einer perspektivischen Sicht auf das jeweilige Kabelende (191, 291-1, 291-2, 391-1, 391-2, 491, 591, 691, 891-1, 891-2, 991) aufgenommen werden.

14. Verfahren gemäß einem der vorhergehenden verfahrensbezogenen Ansprüche,
wobei das vorgegebene Merkmal (196, 496) eine Markierung an dem Kabelende (191, 291-1, 291-2, 391-1, 391-2, 491, 591, 691, 891-1, 891-2, 991) aufweist und der trainierte Algorithmus (105, 205, 305, 805) trainiert ist, die Markierung an dem Kabelende (191, 291-1, 291-2, 391-1, 391-2, 491, 591, 691, 891-1, 891-2, 991) zu identifizieren, und insbesondere wobei, ein positives Steuersignal (106, 206, 306, 806) ausgegeben wird, wenn die Markierung an exakt einem Kabelende (191, 291-1, 291-2, 391-1, 391-2, 491, 591, 691, 891-1, 891-2, 991) in zumindest einem der Bilder (103, 203, 303-1, 303-2, 803-1, 803-2) identifiziert wird, und ein Fehlersignal ausgegeben wird, wenn die Markierung nicht an exakt einem Kabelende (191, 291-1, 291-2, 391-1, 391-2, 491, 591, 691, 891-1, 891-2, 991) in zumindest einem der Bilder (103, 203, 303-1, 303-2, 803-1, 803-2) identifiziert wird; oder
wobei das vorgegebene Merkmal (196, 496) eine Verriegelungsvorrichtung (698), insbesondere eine Kontaktverriegelungsvorrichtung (698), aufweist und der trainierte Algorithmus (105, 205, 305, 805) trainiert ist, das Vorhandensein der Verriegelungsvorrichtung (698) an dem Kabelende (191, 291-1, 291-2, 391-1, 391-2, 491, 591, 691, 891-1, 891-2, 991) zu identifizieren, und insbesondere wobei ein positives Steuersignal (106, 206, 306, 806) ausgegeben wird, wenn die Verriegelungsvorrichtung (698) in zumindest einem der Bilder (103, 203, 303-1, 303-2, 803-1, 803-2) identifiziert wird, und ein Fehlersignal ausgegeben wird, wenn die vorgegebene Markierung nicht in zumindest einem der Bilder (103, 203, 303-1, 303-2, 803-1, 803-2) identifiziert wird; oder
wobei das vorgegebene Merkmal (196, 496) den Zustand einer Verriegelungsvorrichtung (698), insbesondere einer Kontaktverriegelungsvorrichtung (698), kennzeichnet und der trainierte Algorithmus (105, 205, 305, 805) trainiert ist, den Zustand der Verriegelungsvorrichtung (698) an dem Kabelende (191, 291-1, 291-2, 391-1, 391-2, 491, 591, 691, 891-1, 891-2, 991) zu identifizieren, und insbesondere wobei ein positives Steuersignal (106, 206, 306, 806) ausgegeben wird, wenn der Zustand der Verriegelungsvorrichtung (698) in zumindest einem der Bilder (103, 203, 303-1, 303-2, 803-1, 803-2) als verriegelter Zustand identifiziert wird, und ein Fehlersignal ausgegeben wird, wenn der Zustand nicht als verriegelter Zustand identifiziert wird, oder wobei ein Fehlersignal ausgegeben wird, wenn der Zustand der Verriegelungsvorrichtung (698) in zumindest einem der Bilder (103, 203, 303-1, 303-2, 803-1, 803-2) als verriegelter Zustand identifiziert wird, und ein positives Steuersignal (106, 206, 306, 806) ausgegeben wird, wenn der Zustand nicht als verriegelter Zustand identifiziert wird.

15. Nichtflüchtiges Computerprogrammprodukt, welches Anweisungen aufweist, welche, wenn sie durch eine Recheneinrichtung ausgeführt werden, die Recheneinrichtung veranlassen ein Verfahren nach einem der vorherigen verfahrensbezogenen Ansprüche auszuführen.
